# EUROPEAN PATENT APPLICATION

(11) **EP 4 152 793 A1**
(43) Date of publication of application: **22.03.2023**
(21) Application number: 21803882.6
(22) Date of filing: 20.04.2021
(51) Int. Cl.: H04W 16/14, H04W 16/28, H04W 24/10, H04W 72/08, H04B 7/06

(54) **COMMUNICATION DEVICE, COMMUNICATION METHOD, AND PROGRAM**

(30) Priority: 14.05.2020 JP 2020085555
(71) Applicant: Sony Group Corporation, Minato-Ku, Tokyo, 108-0075 (JP)
(72) Inventor: KUSASHIMA, Naoki, Tokyo 108-0075 (JP)
(74) Representative: Witte, Weller & Partner Patentanwälte mbB
(86) International application number: PCT/JP2021/016098
(87) International publication number: WO 2021/230021

(57) **Abstract**

A communication device (20 and 40) includes a sensing unit (241), a communication unit (21 and 41), and a control unit (24 and 45). The sensing unit (241) performs sensing of a channel in an unlicensed band. The communication unit (21 and 41) performs communication based on a sensing result. The control unit (24 and 45) selects, as a sensing method, any one of a first manner of performing sensing a predetermined number of times within a variable period or a second method different from the first method according to a predetermined condition.

## Description

### Field

The present disclosure relates to a communication device, a communication method, and a program.

### Background

A radio access scheme and wireless network of cellular mobile communication (hereinafter, also referred to as "Long Term Evolution (LTE)", "LTE-Advanced (LTE-A)", "LTE-Advanced Pro (LTE-A Pro)", "5th generation (5G)", "New Radio (NR)", "New Radio Access Technology (NRAT)", "Evolved Universal Terrestrial Radio Access (EUTRA)", or "Further EUTRA (FEUTRA)") has been studied in 3rd Generation Partnership Project (3GPP). Note that, in the following description, the LTE includes the LTE-A, the LTE-A Pro, and the EUTRA, and the NR includes the NRAT and the FEUTRA. In the LTE and the NR, a base station device (base station) is also referred to as evolved NodeB (eNodeB) in the LTE and is also referred to as gNodeB in the NR, and a terminal device (mobile station, mobile station device, or terminal) is also referred to as user equipment (UE). The LTE and the NR are cellular communication systems in which a plurality of areas covered by a base station are arranged in a cell shape. A single base station may manage a plurality of cells.

The NR is a next-generation radio access scheme for the LTE, and is a radio access technology (RAT) different from the LTE. The NR is an access technology that can support various use cases including enhanced mobile broadband (eMBB), massive machine type communications (mMTC), and ultra reliable and low latency communications (URLLC). The NR has been studied for a technical framework that addresses usage scenarios, requirements, arrangement scenarios, and the like in those use cases.

The operation of the radio access scheme based on cellular communication in an unlicensed band and a license shared band has been studied. In such an unlicensed band, coexistence with other nodes or wireless systems is considered important, and a function such as Listen Before Talk (LBT) in which channel sensing is performed before transmission, or discontinuous transmission is required for the radio access scheme such as the LTE or the NR. Details of a radio access scheme based on the NR in the unlicensed band are disclosed in Non Patent Literature 1. Note that the unlicensed band is, for example, 2.4 GHz, 5 GHz, 6 GHz, or 60 GHz. The license shared band is, for example, 3.5 GHz or 37 GHz.

In addition, utilization of a high frequency band called millimeter waves from 52.6 GHz to 110 GHz has been studied in view of a demand for a wider band. In a frequency band of 52.6 GHz to 110 GHz, utilization in various use cases such as high data rate eMBB, mobile data offloading, and vertical industry factory application has been studied. Non Patent Literature 2 discloses a study on utilization of millimeter waves in 3GPP.

### Citation List

### Non Patent Literature

Non Patent Literature 1: RP-172021, "Study on NR-based Access to Unlicensed Spectrum," 3GPP TSG RAN Meeting #77, Sapporo, Japan, September 11 to 14, 2017
Non Patent Literature 2: 3GPP TR 38.807 V0.2.0 "3rd Generation Partnership Project; Technical Specification Group Radio Access Network; Study on requirements for NR beyond 52.6 GHz (Release 16)" June, 2019

### Summary

### Technical Problem

In a case where communication is performed in the unlicensed band, a communication device performs Listen-Before-Talk (LBT) for sensing a channel before transmission. While performing the LBT, the communication device waits for transmission. Furthermore, depending on a result of the LTB, the communication device may further wait for transmission. As described above, in a case where transmission is performed after the LBT is performed, a transmission delay may occur and a wireless communication link may become unstable.

Therefore, the present disclosure provides a communication device, a communication method, and a program capable of further stabilizing a wireless communication link.

It should be noted that the above-mentioned problem or purpose is only one of a plurality of problems or purposes that can be solved or achieved by a plurality of embodiments disclosed in the present specification. Solution to Problem

According to the present disclosure, a communication device is provided. The communication device includes a sensing unit, a communication unit, and a control unit. The sensing unit performs sensing of a channel in an unlicensed band. The communication unit performs communication based on a sensing result. The control unit selects, as a sensing method, any one of a first manner of performing sensing a predetermined number of times within a variable period or a second method different from the first method according to a predetermined condition.

### Brief Description of Drawings

FIG. 1 is a diagram illustrating an example of an overall configuration of a communication system according to an embodiment of the present disclosure.
FIG. 2 is a diagram illustrating a configuration example of a 5G core network.
FIG. 3 is a diagram for describing a Listen-Before-Talk (LBT) category 1.
FIG. 4 is a diagram for describing an LBT category 2.
FIG. 5 is a diagram for describing LBT categories 3 and 4.
FIG. 6 is a diagram for describing an outline of an FBE.
FIG. 7 is a diagram for describing omni-directional LBT.
FIG. 8 is a diagram for describing directional LBT.
FIG. 9 is a diagram for describing a method of operating a single beam.
FIG. 10 is a diagram for describing a method of operating a plurality of beams.
FIG. 11 is a block diagram illustrating an example of a configuration of a base station device according to the embodiment of the present disclosure.
FIG. 12 is a schematic block diagram illustrating an example of a digital antenna configuration according to the embodiment of the present disclosure.
FIG. 13 is a schematic block diagram illustrating a digital antenna configuration according to the embodiment of the present disclosure.
FIG. 14 is a diagram illustrating an example of a configuration of a terminal device according to the embodiment of the present disclosure.
FIG. 15 is a diagram illustrating an example of a configuration of a communication control device according to the embodiment of the present disclosure.
FIG. 16 is a diagram for describing a relationship between a beam and a contention window according to the embodiment of the present disclosure.
FIG. 17 is a diagram for describing a relationship between the beam and the contention window according to the embodiment of the present disclosure.
FIG. 18 is a diagram for describing a relationship between the beam and the contention window according to the embodiment of the present disclosure.
FIG. 19 is a sequence diagram illustrating a flow of communication processing according to the embodiment of the present disclosure.

### Description of Embodiments

Hereinafter, preferred embodiments of the present disclosure will be described in detail with reference to the appended drawings. Note that, in the present specification and the drawings, components having substantially the same functional configuration are denoted by the same reference signs, so that an overlapping description of these components is omitted.

In the present specification and the drawings, components having substantially the same functional configuration may be distinguished by adding different alphabets after the same reference signs. For example, a plurality of components having substantially the same functional configuration are distinguished as necessary, such as base station devices 20A and 20B. However, in a case where it is not particularly necessary to distinguish each of the plurality of components having substantially the same functional configuration, only the same reference sign is given. For example, in a case where it is not necessary to particularly distinguish between the base station devices 20A and 20B, they are simply referred to as a base station device 20.

Each of one or more embodiments (including examples and modified examples) described below can be implemented independently. On the other hand, at least some of the plurality of embodiments described below may be implemented in combination with at least some of other embodiments as appropriate. These plurality of embodiments may include novel characteristics different from each other. Therefore, these plurality of embodiments can contribute to achieve or solving different purposes or problems, and can exert different effects.

Note that the description will be made in the following order.
1. Introduction
   1.1. Example of Configuration of System
   1.2. Channel Access Method
   1.3. Technical Problem
   1.4. Related Technologies
2. Configuration Example of Each Device
   2.1. Configuration Example of Base Station Device
   2.2. Configuration Example of Terminal Device
   2.3. Configuration Example of Communication Control Device
3. Technical Features
   3.1. Condition for Application of LBT Category
   3.2. Setting of LBT Parameter
4. Communication Processing
5. Modified Example
6. Conclusion

### «1. Introduction»

### <1.1. Example of Configuration of System>

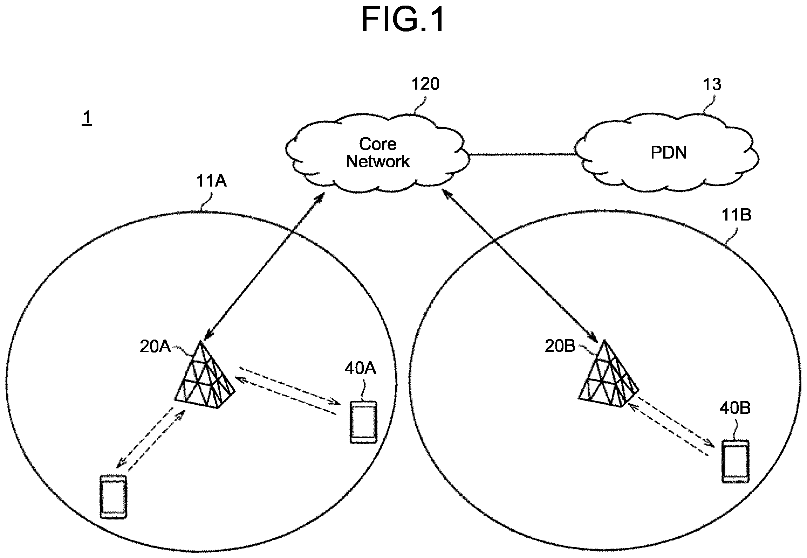

FIG. 1 is a diagram illustrating an example of an overall configuration of a communication system 1 according to an embodiment of the present disclosure. As illustrated in FIG. 1, the communication system 1 includes a plurality of base station devices 20 (20A and 20B), a plurality of terminal devices 40 (40A and 40B), a core network 120, and a packet data network (PDN) 130. Note that the number of respective devices is not limited thereto, and for example, the number of base station devices 20 or the number of terminal devices 40 may be one.

The base station device 20 is a communication device that operates a cell 110 and provides a wireless communication service to one or more terminal devices 40 located inside the coverage of the cell 110. The cell 110 can be operated according to any wireless communication scheme such as LTE or New Radio (NR). The base station device 20 is connected to the core network 120. The core network 120 is connected to the packet data network (PDN) 130 via a gateway device (not illustrated). Note that the base station device 20 may be implemented by a set of a plurality of physical or logical devices. For example, in an embodiment of the present disclosure, the base station device 20 is classified into a plurality of devices including a baseband unit (BBU) and a radio unit (RU), and may be interpreted as a set of these plurality of devices. In addition or instead, in an embodiment of the present disclosure, the base station device 20 may be either or both of the BBU and the RU. The BBU and the RU may be connected by a predetermined interface (for example, eCPRI). In addition or instead, the RU may be referred to as a remote radio unit (RRU) or a Radio DoT (RD). In addition or instead, the RU may correspond to a gNB distributed unit (gNB-DU) described below. In addition or instead, the BBU may correspond to a gNB central unit (gNB-CU) described below. In addition or instead, the RU may be a device integrally formed with an antenna. An antenna of the base station device 20 (for example, the antenna integrally formed with the RU) may adopt an advanced antenna system and support MIMO (for example, FD-MIMO) or beamforming. In the advanced antenna system, the antenna of the base station device 20 (for example, the antenna integrally formed with the RU) may include, for example, 64 transmitting antenna ports and 64 receiving antenna ports.

Further, a plurality of base station devices 20 may be connected to each other. One or more base station devices 20 may be included in a radio access network (RAN). That is, the base station device 20 may be simply referred to as a RAN, a RAN node, an access network (AN), or an AN node. The RAN in the LTE is referred to as an enhanced universal terrestrial RAN (EUTRAN). The RAN in the NR is referred to as an NGRAN. The RAN in W-CDMA (UMTS) is referred to as a UTRAN. The base station device 20 in the LTE is referred to as an evolved node B (eNodeB) or an eNB. That is, the EUTRAN includes one or more eNodeBs (eNBs). Further, the base station device 20 in the NR is referred to as a gNodeB or a gNB. That is, the NGRAN includes one or more gNBs. Further, the EUTRAN may include a gNB (en-gNB) connected to the core network (EPC) in the communication system (EPS) of the LTE. Similarly, the NGRAN may include an ng-eNB connected to the core network (5G Core (5GC)) in a 5G communication system (5GS). In addition or instead, in a case where the base station device 20 is an eNB, a gNB, or the like, the base station may be referred to as 3GPP access. In addition or instead, in a case where the base station device 20 is a radio access point, the base station may be referred to as non-3GPP access. In addition or instead, the base station device 20 may be an optical feeder device which is called a remote radio head (RRH). In addition or instead, in a case where the base station device 20 is a gNB, the base station device 20 may be referred to as a combination of a gNB CU and a gNB DU described above or any of them. The gNB CU hosts a plurality of higher layers (for example, radio resource control (RRC), service data adaptation protocol (SDAP), and PDCP) of the access stratum for communication with the UE. On the other hand, the gNB-DU hosts a plurality of lower layers (for example, RLC, MAC, and PHY) of the access stratum. That is, among messages and information to be described later, RRC signalling (for example, various system information blocks (SIB) including a master information block (MIB) and an SIB1, an RRCSetup message, and an RRCReconfiguration message) may be generated by the gNB CU, while a downlink control indicator (DCI) and various physical channels (for example, a PDCCH and a PBCH) to be described later may be generated by the gNB-DU. Alternatively, in the RRC signalling, for example, some configurations such as IE: cellGroupConfig may be generated by the gNB-DU, and the remaining configurations may be generated by the gNB-CU. These configurations may be transmitted and received by an F1 interface to be described later. The base station device 20 may be configured to be able to perform communication with another base station device 20. For example, in a case where a plurality of base station devices 20 are eNBs or a combination of eNBs and en-gNBs, the base station devices 20 may be connected by an X2 interface. In addition or instead, in a case where a plurality of base station devices 20 are eNBs or a combination of gn-eNBs and gNBs, the devices may be connected by an Xn interface. In addition or instead, in a case where a plurality of base station devices 20 are a combination of gNB CUs and gNB DUs, the devices may be connected by the above-described F1 interface. The messages/information (RRC signalling, DCI information, or physical channel) to be described later may be communicated between a plurality of base station devices 20 (for example, via the X2, Xn, or F1 interface).

Further, as described above, the base station device 20 may be configured to manage a plurality of cells. A cell provided by the base station device 20 is called a serving cell. The serving cell includes a primary cell (PCell) and a secondary cell (SCell). In a case where Dual Connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), or NR-NR Dual Connectivity) is provided to the UE (for example, terminal device 40), the PCell and zero or one or more SCells provided by a master node (MN) are referred to as a master cell group. Further, the serving cell may include a primary secondary cell or a primary SCG Cell (PSCell). That is, in a case where the Dual Connectivity is provided to the UE, the PSCell and zero or one or more SCells provided by a secondary node (SN) are referred to as a secondary cell group (SCG). Unless specially configured (for example, physical uplink control channel (PUCCH) on SCell), the PUCCH is transmitted by the PCell and the PSCell, not by the SCell. Radio link failure is detected in the PCell and the PSCell, and is not detected (does not have to be detected) in the SCell. Since the PCell and the PSCell have a special role in the serving cell(s) as described above, they are also called special cells (SpCells). One downlink component carrier and one uplink component carrier may be associated with one cell. Further, a system bandwidth corresponding to one cell may be divided into a plurality of bandwidth parts. In this case, one or more bandwidth parts (BWPs) may be set in the UE and one bandwidth part may be used in the UE as an active BWP. Further, radio resources (for example, a frequency band, numerology (subcarrier spacing), and slot configuration) that can be used by the terminal device 40 may be different for each cell, each component carrier, or each BWP.

In a case where the core network 120 is an NR core network (5G Core (5GC)), the core network 120 can include an access and mobility management function (AMF), a session management function (SMF), a user plane function (UPF), a policy control function (PCF), and a unified data management (UDM).

In a case where the core network 120 is an LTE core network (evolved packet core (EPC)), the core network 120 can include a mobility management entity (MME), a serving gateway (S-GW), a PDN gateway (P-GW), a policy and charging rule function (PCRF), and a home subscriber server (HSS). The AMF and the MME are control nodes that handle a control plane signal, and manages the mobility of the terminal device 40. The UPF and the S-GW/P-GW are nodes that handle a user plane signal. The PCF/PCRF is a control node that performs a control related to a policy such as Quality of Service (QoS) for a PDU session or a bearer and charging. The UDM/HSS is a control node that handles subscriber data and performs a service control.

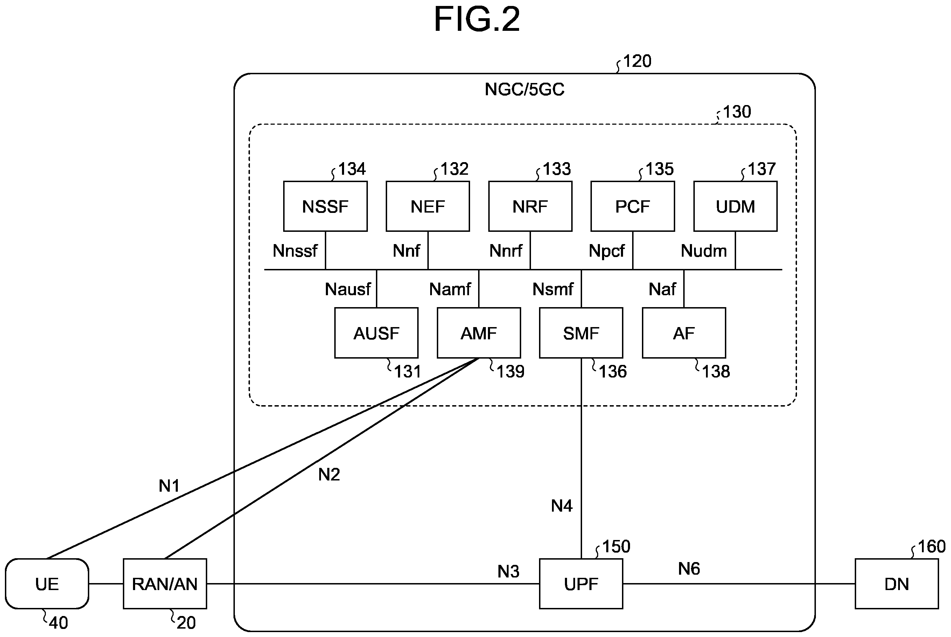

Here, a case where the core network 120 is a core network of a 4th generation mobile communication system (5G) will be described with reference to FIG. 2. FIG. 2 is a diagram illustrating a configuration example of a 5G core network.

A cellular network system of the communication system 1 according to the present embodiment includes a radio access network (RAN) and a core network (CN). The RAN is a wireless system between the base station device 20 and the terminal device 40. The CN mainly performs permission and session management when the terminal device 40 accesses the cellular network. Also in 4G and 5G, the CN includes a control plan function and a user plane function.

As described above, the communication system 1 according to the present embodiment includes the 5G core network 120, the base station device (RAN/AN) 20, the terminal device (UE) 40, and a DN node 160.

The 5G core network 120 is also referred to as 5G core/next generation core (5GC/NGC). Hereinafter, the 5G core network 120 is also referred to as the 5GC/NGC 120. The 5GC/NGC 120 is connected to the user equipment (UE) 40 via the RAN/AN 20.

The 5GC/NGC 120 includes a user plane function (UPF) node 150 and a control plane function group 130.

The UPF node 150 is a network function (NF) node which is important in the user plane function. The UPF node 150 has a user plane processing function. The UPF node 150 has a function of routing/forwarding data handled in user plane.

Note that the UPF node 150 and the data network (DN) node 160 may be combined as a user plane function group. In this case, the DN node 160 is included in the 5GC/NGC 120. The DN node 160 has a function of enabling connection to a service of a cellular service company, the Internet, or a service of a third party.

The control plane function group 130 includes an access management function (AMF) node 139, a session management function (SMF) node 136, an authentication server function (AUSF) node 131, a network slice selection function (NSSF) node 134, a network exposure function (NEF) node 132, a network repository function (NRF) node 133, a policy control function (PCF) node 135, a unified data management (UDM) node 137, and an application function (AF) node 138.

The AMF node 139 has functions such as registration processing, connection management, and mobility management for the UE 40. For example, the AMF node 139 may perform terminal handover management of the terminal device 40. In addition, the AMF node 139 manages location information of the terminal device 40.

The SMF node 136 has functions such as session management and IP assignment and management for the UE 40. A main role of the SMF node 136 is to establish or release a PDU session for the terminal device 40 and manage the PDU session. In addition, the SMF node 136 assigns an IP address to the terminal device 40.

The UDM node 137 has functions of generating 3GPP AKA authentication information and processing a user ID. The AF node 138 has a function of interacting with the core network to provide a service.

The AUSF node 131 has an authentication function. The NSSF node 134 has a function related to selection of a network slice. The NEF node 132 has a function of providing network function capabilities and events to a third party, the AF node 138, and an edge computing function.

The NRF node 133 has a function of finding a network function and holding a profile of the network function. The PCF node 135 has a policy control function.

The description returns to FIG. 1. The terminal device 40 is a communication device that performs wireless communication with the base station device 20 under the control of the base station device 20. For example, the terminal device 40 measures a downlink signal from the base station device 20 and reports measurement information indicating a measurement result to the base station device 20. The base station device 20 controls wireless communication with the terminal device 40 based on the reported measurement information. On the other hand, the terminal device 40 can transmit an uplink signal for measurement to the base station device 20. In this case, the base station device 20 measures the uplink signal from the terminal device 40 and controls the wireless communication with the terminal device 40 based on the measurement information.

As described above, the base station devices 20 can transmit and receive information to and from each other by using an inter-base station interface. In a case where the core network is the 5GC, the inter-base station interface may be an Xn interface. In a case where the core network is the EPC, the inter-base station interface may be an X2 interface. For example, the base station device 20 transmits measurement information related to the terminal device 40 that is predicted to be handed over (for example, a measurement result for a cell managed by a source base station device or a measurement result for a neighboring cell) to another adjacent base station device 20. As a result, a stable handover is implemented, and stability of the wireless communication of the terminal device 40 is secured.

Note that, although not illustrated in FIG. 1, there can be a communication device that provides a wireless communication service operated by another radio access technology (RAT) such as Wi-Fi (registered trademark) or MulteFire other than cellular communication around the communication system 1. Such a communication device is typically connected to a PDN 13.

### <1.2. Channel Access Method>

It is assumed that NR-Unlicensed (NR-U) supports not only licensed assisted access (LAA) using a carrier aggregation mechanism, but also various use cases such as dual connectivity, stand-alone operated only with an unlicensed band, and a use case in which one of a DL carrier and a UL carrier is a licensed band and the other is an unlicensed band (for example, licensed DL and unlicensed UL).

In order to support these use cases, in the NR-U, a mechanism capable of transmitting a physical channel and a physical signal transmitted in a primary cell (PCell), such as a synchronization signal (SS), a physical random access channel (PRACH), and a physical uplink control channel (PUCCH), in an unlicensed band has been studied.

In general, in the unlicensed band, the communication device senses a channel before transmitting a physical channel and/or a physical signal, and Listen-Before-Talk (LBT) for determining whether or the channel is clear (idle) or busy is used. In a case where the channel is clear (LBT succeeds), the communication device can transmit a physical channel and/or a physical signal. On the other hand, in a case where the channel is busy (LBT fails), the communication device cannot transmit a physical channel and/or a physical signal.

Furthermore, utilization of a 60 GHz millimeter wave unlicensed band has been studied. Also in the millimeter wave unlicensed band, other radio access schemes such as 802.11ad and 802.11ay are introduced. The LBT can be used considering coexistence with devices of these other radio access schemes and devices of other operators.

For a channel in the unlicensed band (hereinafter, also referred to as an unlicensed channel), a wireless device (the base station device or terminal device) performs channel access (medium access or LBT) before transmitting a signal as described above.

In the channel access, the wireless device performs energy measurement (carrier sense, sensing, or channel clear assessment (CCA)) for the channel and compares a measured energy value of the channel with an energy detection threshold. In a case where the measured energy value of the channel is lower than the energy detection threshold, the channel is determined as being clear, and in a case where the measured energy value of the channel is higher than the energy detection threshold, the channel is determined as being busy. In a case where the channel is determined as being clear in all sensing slots, the wireless device can acquire a transmission right for the channel and transmit a signal.

Further, the channel for which the wireless device has acquired the transmission right may be used for transmission by another wireless device. In this case, a grant is transmitted from the wireless device that has acquired the transmission right to another wireless device.

The wireless device that acquires the transmission right for the channel is referred to as an initiating device. The another wireless device using the channel for which the wireless device has acquired the transmission right is referred to as a responding device.

Note that, in 3GPP, four types of LBT categories are defined as carrier sensing methods. In the channel access, the LBT corresponding to one of the following LBT categories is performed.
· LBT Category 1: No LBT
· LBT category 2: LBT without random backoff
· LBT category 3: LBT with random backoff by fixed-size contention window
· LBT category 4: LBT with random backoff by variable-size contention window

Here, each LBT category will be described with reference to FIGS. 1 to 3.

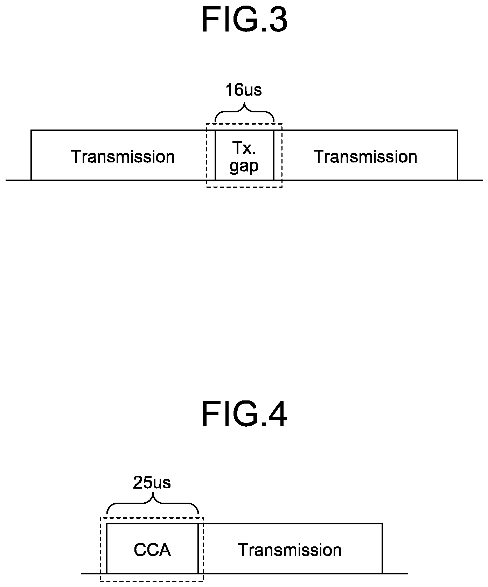

FIG. 3 is a diagram for describing the LBT category 1. As illustrated in FIG. 3, in the LBT category 1, the wireless device performs communication without performing the LBT. In the example of FIG. 3, the wireless device performs transmission at a transmission interval of 16 microseconds.

FIG. 4 is a diagram for describing the LBT category 2. As illustrated in FIG. 4, in the LBT category 2, the wireless device performs communication by performing the LBT without the random backoff. In the example of FIG. 4, the wireless device performs the CCA on one sensing slot, and transmits a signal in a case where it is determined that the channel is clear. Here, the length of one sensing slot is 25 microseconds.

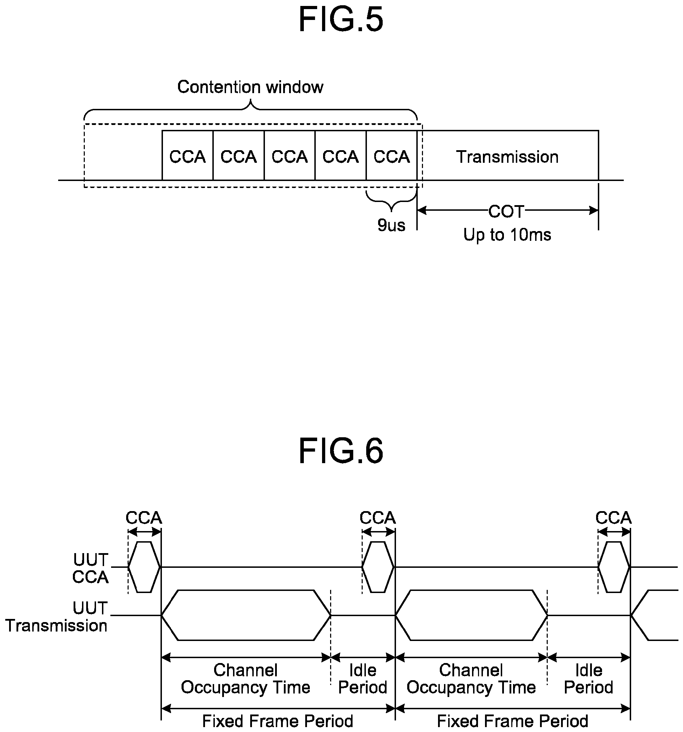

FIG. 5 is a diagram for describing the LBT categories 3 and 4. As illustrated in FIG. 5, in the LBT categories 3 and 4, the wireless device performs the CCA a predetermined number of times in a contention window (CW), and transmits a signal in a case where it is determined that the channel is clear. That is, the wireless device performs the CCA in a predetermined number of sensing slots, and transmits a signal in a case where it is determined that the channel is clear in all the sensing slots. FIG. 5 illustrates a case where the length of one sensing slot is 9 microseconds and the CCA is performed five times. Note that the LBT category 3 and the LBT category 4 are different from each other in whether the size of the contention window is fixed or variable. Alternatively, the LBT category 3 and the LBT category 4 are different from each other in whether or not the size of the contention window is adjusted.

### <1.3. Technical Problem>

Only the LBT category 4 is applied to data transmission in the current unlicensed band. Therefore, an unnecessary transmission delay may occur.

Specifically, in a low-congestion environment, an unnecessary contention window adjustment may occur due to an error caused by link adaptation, and a transmission delay may occur. Here, examples of the low-congestion environment, that is, an environment in which a packet contention probability is low include a 60 GHz band. In the 60 GHz band, communication is performed by beamforming for transmission and reception. Therefore, a probability of giving interference to another link decreases.

On the other hand, even in a high-congestion environment, in a case where only the LBT category 4 is applied, the minimum contention window is set for the first transmission, and thus, a contention occurs frequently. Therefore, there is a possibility that inadvertent contention is repeated until the contention window is adjusted to an appropriate contention window, and the utilization efficiency of the band is deteriorated.

As described above, in a case where only one channel access scheme (for example, the LBT category 4) is applied to data communication in the unlicensed band, a transmission delay may occur, and the wireless communication link may become unstable.

### · Overview of Proposed Technology

Therefore, the present disclosure proposes a mechanism capable of further stabilizing the wireless communication link. In the proposed technology, the base station device 20 or terminal device 40 (an example of the communication device) performs switching between the LBT category 3 (an example of a second scheme) and the LBT category 4 (an example of a first scheme) as a carrier sensing method.

The base station device 20 or terminal device 40 selects and switches the LBT category according to, for example, a notification from another device or a predetermined condition such as a surrounding environment. As a result, in the proposed technology, the contention window can be appropriately set, an unnecessary transmission delay can be suppressed, and the wireless communication link can be further stabilized.

### <1.4. Related Technologies>

### <Channel Access Procedure for Unlicensed Channel>

A channel access (LBT) procedure is performed to access an unlicensed channel on which the base station device 20 or the terminal device 40 performs transmission.

In a channel access procedure defined as load-based equipment (LBE), channel sensing is performed once or a plurality of times. Determination (occupation determination) of whether the channel is idle (unoccupied, available, or enabled) or busy (occupied, unavailable, or disabled) based on a sensing result. In the channel sensing, energy of the channel during a predetermined waiting time is sensed.

Examples of the waiting time of the channel access procedure include a first waiting time (slot), a second waiting time, a third waiting time (defer period), and a fourth waiting time.

A slot is a unit of waiting time of the base station device 20 or the terminal device 40 in the channel access procedure. The slot is defined as, for example, 9 microseconds.

In the second waiting time, one slot is inserted at the head. The second waiting time is defined as, for example, 16 microseconds.

The defer period includes the second waiting time and a plurality of consecutive slots following the second waiting time. The number of the plurality of consecutive slots following the second waiting time is determined based on a priority class (channel access priority class) used to satisfy the QoS.

The fourth waiting time includes the second waiting time and one slot following the second waiting time. The fourth waiting time is defined as, for example, 25 microseconds.

The base station device 20 or the terminal device 40 senses a predetermined channel during a predetermined slot. In a case where power detected by the base station device 20 or the terminal device 40 for at least 4 microseconds within the predetermined slot is smaller than a predetermined energy detection threshold, the predetermined slot is considered to be idle. On the other hand, in a case where the power is greater than the predetermined energy detection threshold, the predetermined slot is considered to be busy.

The channel access procedure includes a first channel access procedure, a second channel access procedure, and a third channel access procedure. The first channel access procedure is performed using a plurality of slots and a defer period. The second channel access procedure is performed using one second waiting time or one fourth waiting time. The third channel access procedure is performed using the second waiting time.

Parameters related to channel access are determined based on the priority class. Examples of the parameters related to channel access include a minimum contention window, a maximum contention window, a maximum channel occupation time, and a possible contention window value. The priority class is determined by a value of a QoS class identifier (QCI) or a 5G QoS identifier (5QI) for processing the QoS. Table 1 is a table showing correspondence between priority classes and parameters related to channel access, and Table 2 shows an example of mapping between priority classes and QCIs. Table 3 shows an example of mapping between priority classes and 5QIs.

**(Table 1) Example of Table Correspondence between Priority Classes and Parameters Related to Channel Access**

| Channel access priorit y class (p) | m ₚ | Minimum contentio n window CW_{min,p} | Minimum contentio n window CW_{max,p} | Maximum channel occupatio n time T_{m cot,p} | Possible contention window value CWₚ |
|---|---|---|---|---|---|
| 1 | 1 | 3 | 7 | 2ms | {3,7} |
| 2 | 1 | 7 | 15 | 3ms | {7,15} |
| 3 | 3 | 15 | 63 | 8 or 10ms | {15,31,63} |
| 4 | 7 | 15 | 1023 | 8 or 10ms | {15,31,63,127,255,511,102 3 } |

**(Table 2) Example of Mapping between Priority Classes and QCIs**

| Channel access priority class (p) | QCI |
|---|---|
| 1 | 1,3,5,65,66,69,70 |
| 2 | 2,7 |
| 3 | 4, 6, 8, 9 |
| 4 | Others |

**(Table 3) Example of Mapping between Priority Classes and 5Qis**

| ILBT parameter index | LBT category | Contention window size |
|---|---|---|
| 1 | LBT category 3 | 15 |
| 2 | LBT category 3 | 31 |
| 3 | LBT category 3 | 63 |
| 4 | LBT category 4 | - |

### (Details of First Channel Access Procedure)

The first channel access procedure (type-1 channel access procedure) is classified into the LBT category 3 or the LBT category 4.

In the first channel access procedure, the following procedure is performed.
(0) The channel sensing is performed during a defer period. In a case where the channel is idle in a slot within a defer period, the procedure proceeds to Step (1); otherwise, the procedure proceeds to Step (6).
(1) An initial value of a counter is acquired. A possible initial value of the counter is an integer between 0 and a contention window CW. The initial value of the counter is determined randomly according to uniform distribution. The initial value of the counter is set in a counter N, and the procedure proceeds to Step (2).
(2) In a case where the counter N is larger than 0 and subtraction of the counter N is selected, 1 is subtracted from the counter N. Thereafter, the procedure proceeds to Step (3).
(3) A slot is added and waiting is performed. Further, in the added slot, a channel is sensed. In a case where the added slot is idle, the procedure proceeds to Step (4); otherwise, the procedure proceeds to Step (5).
(4) In a case where the counter N is 0, the procedure is stopped. Otherwise, the procedure proceeds to Step (2).
(5) A defer period is added and waiting is performed. Further, a channel is sensed until the channel is detected as being busy in one of slots included in the added defer period, or until all the slots included in the added defer period can be detected as being idle. Thereafter, the procedure proceeds to Step (6).
(6) In a case where the channel is sensed as idle in all of the slots included in the added defer period, the procedure proceeds to Step (4); otherwise, the procedure proceeds to Step (5).

After the stop in Step (4) in the above-described procedure, transmission including data such as a physical downlink shared channel (PDSCH) and a physical uplink shared channel (PUSCH) is performed on the channel.

Note that, after the stop in Step (4) in the above-described procedure, transmission need not be performed on the channel. In this case, thereafter, transmission may be performed without performing the above-described procedure in a case where the channel is idle in all the slots and the defer period immediately before the transmission. On the other hand, in a case where the channel is not idle in any of the slots and the defer period, the procedure proceeds to Step (1) after the channel is sensed as idle in all of the slots in the added defer period.

### (Details of Second Channel Access Procedure)

The second channel access procedure (type-2 channel access procedure) is classified into the LBT category 2. In the second channel access procedure, transmission may be performed immediately after the channel is determined as being idle as a result of sensing for at least the second waiting time or the fourth waiting time. On the other hand, no transmission is performed in a case where it is determined that the channel is not idle as a result of sensing for at least the second waiting time or the fourth waiting time. The second channel access procedure is applied in a case where the transmission interval is 16 microseconds or 25 microseconds.

The second channel access procedure using the fourth waiting time is referred to as a type-2A channel access procedure, and the second channel access procedure using the second waiting time is referred to as a type-2B channel access procedure.

### <Details of Third Channel Access Procedure>

The third channel access procedure (type-2C channel access procedure) is classified into the LBT category 1. In the third channel access procedure, the channel sensing is not performed before transmission. The third channel access procedure is applied in a case where the transmission interval is within 16 microseconds.

### <Contention Window Adaptation Procedure>

In the LBT category 4, a contention window adaptation procedure is performed.

The contention window (CW) used in the first channel access procedure is determined based on the contention window adaptation procedure.

A value of the contention window CW is retained for each priority class. Further, the contention window CW has a value between the minimum contention window and the maximum contention window. The minimum contention window and the maximum contention window are determined based on the priority class.

Adjustment of the value of the contention window CW is performed before Step (1) in the first channel access procedure. The value of the contention window CW is increased in a case where a proportion of NACK in hybrid automatic repeat request (HARQ) responses corresponding to a shared channel of a reference HARQ process in a reference subframe (reference slot or reference period) in at least the contention window adaptation procedure is higher than a threshold. Otherwise, the value of the contention window CW is set to the minimum contention window.

The value of the contention window CW is increased based on, for example, Equation CW = 2 · (CW + 1) - 1.

The reference period is defined as from the head of the occupied channel to the end of the first slot including at least one unicast PDSCH or to the end of the first transmission burst including at least one unicast PDSCH. For example, 90% is set as a threshold.

### (Details of Channel Access Procedure in Downlink)

In a case of performing downlink transmission including a PDSCH, a physical downlink control channel (PDCCH), and/or an enhanced physical downlink control channel (EPDCCH) on the unlicensed channel, the base station device 20 accesses the channel based on the first channel access procedure and performs the downlink transmission.

On the other hand, in a case of performing downlink transmission that includes a DRS, but does not include the PDSCH on the unlicensed channel, the base station device 20 accesses the channel based on the second channel access procedure and performs the downlink transmission. Note that the period of the downlink transmission is preferably shorter than 1 millisecond.

### (Details of Channel Access Procedure in Uplink)

On the unlicensed channel, in a case where it is indicated to perform the first channel access procedure by an uplink grant for scheduling a PUSCH, the terminal device 40 performs the first channel access procedure before the uplink transmission including the PUSCH.

Further, in a case where it is instructed to perform the second channel access procedure by an uplink grant for scheduling a PUSCH, the terminal device 40 performs the second channel access procedure before the uplink transmission including the PUSCH.

Further, for uplink transmission that does not include the PUSCH, but includes a sounding reference signal (SRS), the terminal device 40 performs the second channel access procedure before the uplink transmission.

Further, in a case where the end of the uplink transmission indicated by the uplink grant is within an uplink duration (UL duration), regardless of a procedure type indicated by the uplink grant, the terminal device 40 performs the second channel access procedure before the uplink transmission.

Further, in a case where uplink transmission is performed after the fourth waiting time after the end of downlink transmission from the base station device 20, the terminal device 40 performs the second channel access procedure before the uplink transmission.

### (Directional LBT)

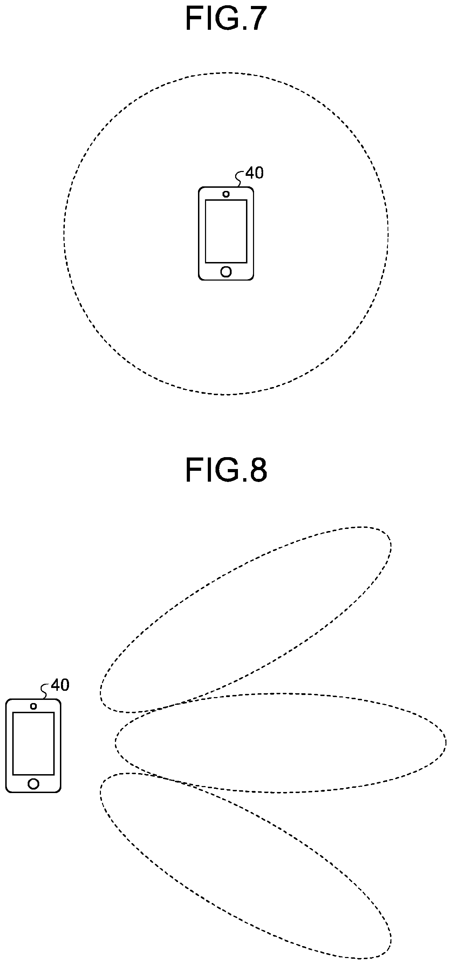

Omni-directional LBT and directional LBT will be described with reference to FIGS. 7 and 8. FIG. 7 is a diagram for describing the omni-directional LBT, and FIG. 8 is a diagram for describing the directional LBT. Although FIGS. 7 and 8 illustrate the LBT performed by the terminal device 40, the base station device 20 can also perform the LBT similarly.

As illustrated in FIG. 7, in the omni-directional LBT, the terminal device 200 performs channel sensing without beamforming. The channel sensing without beamforming is channel sensing by reception of which directivity is not controlled as described above, or channel sensing without direction information.

Unlike the omni-directional LBT, a method in which the channel sensing has directivity includes the directional LBT.

As illustrated in FIG. 8, in the directional LBT, measurement of received power in a predetermined direction is performed. That is, measurement in a direction other than the predetermined direction is not performed.

As a result, the direction of measurement is limited, and thus, the frequency of being busy due to transmission from an unaffected device can be suppressed.

In the directional LBT, a physical signal and/or a physical channel is transmitted in a direction in which the LBT has succeeded.

### (Receiver Assisted LBT)

Receiver assisted LBT is LBT that also uses information from a reception device for the LBT originally performed only by a transmission device.

As an example of the receiver assisted LBT, there is LBT using a feedback of a channel state from the reception device. The transmission device adjusts success or failure of the LBT and an LBT parameter based on the information on the channel state from the reception device. Examples of the channel state include an inter-cell interference between the same operators, an inter-cell interference between different operators, and an interference between different RATs. Examples of the LBT parameter to be adjusted include an LBT threshold and a contention window.

Another example of the receiver assisted LBT is LBT using response information from the reception device.

The transmission device transmits a physical channel and/or a physical signal to the reception device after the LBT succeeds. The reception device that has received the physical channel and/or the physical signal performs predetermined LBT. In a case where the predetermined LBT has succeeded, the reception device transmits a response to the transmission device, and in a case where the predetermined LBT has failed, the reception device transmits no response or transmits nothing to the transmission device. The transmission device determines whether or not channel occupancy is successful based on the response information from the reception device.

### (NR Beam Operation Method)

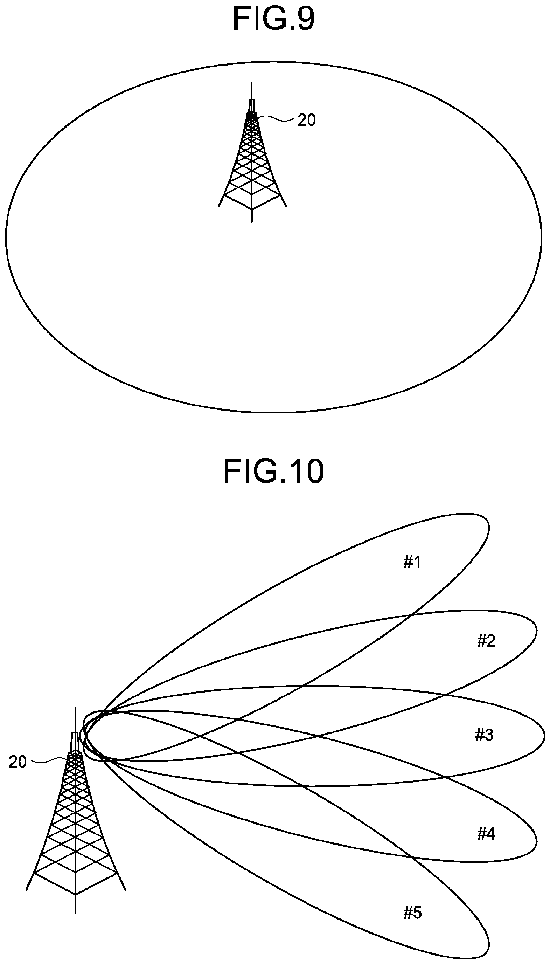

In the NR, it is assumed that there are two types of beam operation methods, a method of operating a single beam and a method of operating a plurality of beams. The beam operation method will be described with reference to FIGS. 9 and 10. FIG. 9 is a diagram for describing the method of operating a single beam. FIG. 10 is a diagram for describing the method of operating a plurality of beams.

As illustrated in FIG. 9, the operation of a single beam is an operation method using a single beam for a predetermined cell coverage. Specifically, a cell-specific physical channel or physical signal is transmitted using a single beam within a predetermined cell coverage. The LTE may also be considered to be the operation of a single beam.

As illustrated in FIG. 10, the operation of a plurality of beams is an operation method using one or more beams for a predetermined cell coverage. Specifically, a cell-specific physical channel or physical signal is transmitted using a plurality of beams. For example, in analog beamforming or hybrid beamforming, a beam in a predetermined direction is transmitted in a predetermined time instance, and it is difficult to transmit a beam other than the beam in the predetermined direction. Therefore, by switching time instances, beams in a plurality of directions are switched to cover a wide area. That is, a predetermined beam on which a cell-specific physical channel or physical signal is transmitted is transmitted in one time instance (time resource). Different beams are transmitted in different time instances. As described above, in the operation of a plurality of beams, the plurality of beams are operated by being switched in a plurality of time instances. For example, in FIG. 10, beams in five directions, beams #1 to #5, are switched. Switching a plurality of beams in a plurality of time instances is referred to as beam sweeping.

Note that, even in a digital antenna configuration, the operation of a plurality of beams may be performed.

Also, the beam can be rephrased as a channel, a path, an antenna, an antenna port, or the like. That is, transmissions using different beams can be rephrased as transmissions using different channels, paths, antennas, or antenna ports. Furthermore, the beam can also be assumed as a virtual cell. The terminal device 40 can recognize different beams transmitted from the same cell as different virtual cells or virtual carriers.

### (Appropriate Beam Selection in NR)

In the NR, the communication system 1 preferably selects an appropriate beam for each of downlink and uplink. Specifically, it is preferable to appropriately select each of a downlink transmission beam of the base station device 20 and a downlink reception beam of the terminal device 40. In addition, it is preferable to appropriately select an uplink transmission beam of the terminal device 40 and an uplink reception beam of the base station device 20.

An appropriate downlink transmission beam of the base station device 20 can be obtained based on a report or feedback information received from the terminal device 40. An example of a process of obtaining an appropriate downlink transmission beam is as below. The base station device 20 transmits a predetermined known signal a plurality of times by using different downlink transmission beams. The terminal device 40 determines an appropriate downlink transmission beam from the known signals transmitted a plurality of times based on reception strength, reception quality, or the like, and reports or feeds back information corresponding to the appropriate downlink transmission beam to the base station device 20. As a result, the base station device 20 can recognize the appropriate downlink transmission beam. Here, examples of the known signal include a synchronization signal (SS)/physical broadcast channel (PBCH) block, a channel state information-reference signal (CSI-RS), a demodulation reference signal (DMRS) of a physical downlink control channel (PDCCH), a DMRS of a physical downlink shared channel (PDSCH), and a phase tracking reference signal (PTRS).

Alternatively, an appropriate downlink transmission beam of the base station device 20 can be obtained based on an appropriate uplink reception beam of the base station device 20.

An appropriate uplink transmission beam of the terminal device 40 may be obtained based on a report or feedback information received from the base station device 20. An example of a process of obtaining an appropriate uplink transmission beam is as below. The terminal device 40 transmits a predetermined known signal a plurality of times by using different uplink transmission beams. The base station device 20 determines an appropriate uplink transmission beam from the known signals transmitted a plurality of times based on reception strength, reception quality, or the like, and reports or notifies the terminal device 40 of information corresponding to the appropriate uplink transmission beam. As a result, the terminal device 40 can recognize the appropriate uplink transmission beam. Here, examples of the known signal include a physical random access channel (PRACH), a sounding reference signal (SRS), DMRS of a physical uplink control channel (PUCCH), and a DMRS of a physical uplink shared channel (PUSCH).

Alternatively, an appropriate uplink transmission beam of the terminal device 40 may be based on an appropriate downlink reception beam of the terminal device 40.

### (Quasi-Co-Location (QCL) in NR)

In the NR, QCL representing a channel characteristic is defined. For example, in a case where it can be assumed that channel characteristics of two different signals (physical channels, physical signals, or antenna ports) are the same, the two signals are quasi-co-located (QCL).

Examples of the channel characteristic represented by QCL include Doppler shift, Doppler spread, an average delay, delay spread, and a spatial Rx parameter.

QCL between antenna ports is defined in a transmission configuration indicator (TCI) state and is defined as the following types.
- 'QCL-TypeA': {Doppler shift, Doppler spread, average delay, delay spread}
- 'QCL-TypeB': {Doppler shift, Doppler spread}
- 'QCL-TypeC': {Doppler spread, average delay}
- 'QCL-TypeD': {Spatial Rx parameter}

### (Details of Downlink Transmission Beam in NR)

In the NR, a downlink transmission beam is defined by a predetermined signal index and QCL.

Examples of the predetermined signal include a synchronization signal/physical broadcast channel (SS/PBCH) block. For example, a plurality of SS/PBCH blocks having the same information and having different indexes can be transmitted. SS/PBCH blocks having different indexes may be transmitted by different transmission beams.

In addition, depending on a TCI state between an SS/PBCH block having a predetermined index and another reference signal and a physical channel, a relationship between beams of the another reference signal and the physical channel is determined.

### <2. Configuration Example of Each Device>

### <2.1. Configuration Example of Base Station Device>

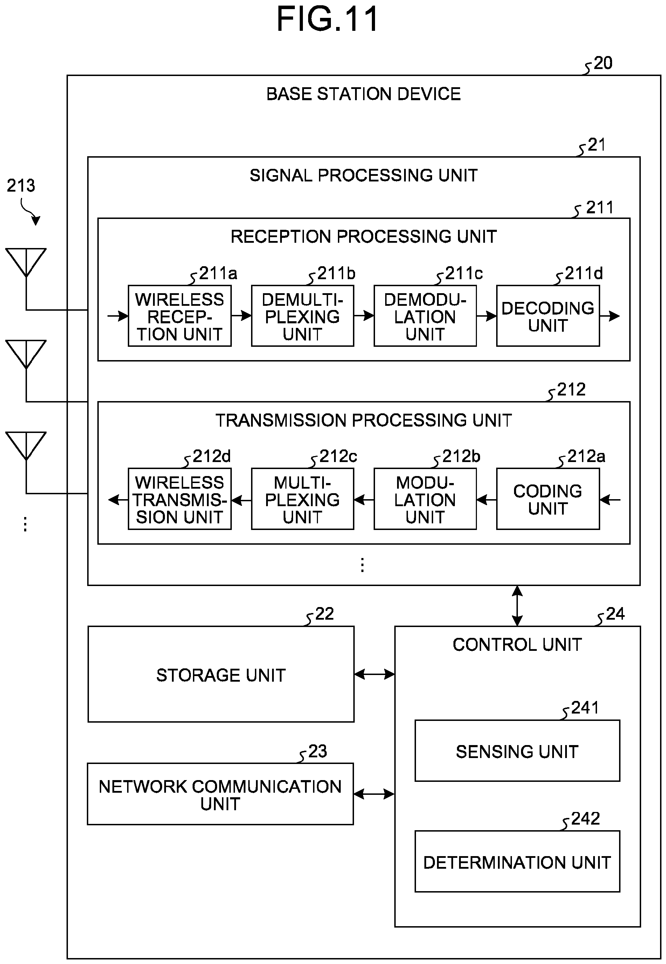

Next, the configuration of the base station device 20 will be described. FIG. 11 is a diagram illustrating an example of the configuration of the base station device 20 according to the embodiment of the present disclosure. The base station device 20 is a communication device (wireless system) that performs wireless communication with the terminal device 40. The base station device 20 is a type of information processing device.

The base station device 20 includes a wireless communication unit 21, a storage unit 22, a network communication unit 23, and a control unit 24. Note that the configuration illustrated in FIG. 11 is a functional configuration, and a hardware configuration may be different from this. Further, the functions of the base station device 20 may be distributed to and implemented in a plurality of physically separated devices.

The wireless communication unit 21 is a wireless communication interface that performs wireless communication with other communication devices (for example, the terminal device 40 and another base station device 20). The wireless communication unit 21 is operated under the control of the control unit 24. The wireless communication unit 21 may support a plurality of radio access schemes. For example, the wireless communication unit 21 may support both the NR and the LTE. The wireless communication unit 21 may support another cellular communication scheme such as W-CDMA or cdma2000. Further, the wireless communication unit 21 may support a wireless LAN communication scheme in addition to the cellular communication scheme. It is a matter of course that the wireless communication unit 21 may only support one radio access scheme.

The wireless communication unit 21 includes a reception processing unit 211, a transmission processing unit 212, and an antenna 413. The wireless communication unit 21 may include a plurality of reception processing units 211, a plurality of transmission processing units 212, and a plurality of antennas 413. Note that, in a case where the wireless communication unit 21 supports a plurality of radio access schemes, each unit of the wireless communication unit 21 can be individually configured for each radio access scheme. For example, in a case where the base station device 20 supports the NR and the LTE, the reception processing unit 211 and the transmission processing unit 212 may be individually configured for each of the NR and the LTE.

The reception processing unit 211 processes an uplink signal received via the antenna 413. The reception processing unit 211 includes a wireless reception unit 211a, a demultiplexing unit 211b, a demodulation unit 211c, and a decoding unit 211d.

The wireless reception unit 211a performs, on the uplink signal, down-conversion, removal of an unnecessary frequency component, a control of an amplification level, quadrature demodulation, conversion into a digital signal, removal of a guard interval, extraction of a frequency domain signal by fast Fourier transform, and the like. For example, it is assumed that the radio access scheme of the base station device 20 is a cellular communication scheme such as LTE. At this time, the demultiplexing unit 211b separates an uplink channel such as a physical uplink shared channel (PUSCH) or physical uplink control channel (PUCCH) and an uplink reference signal from a signal output from the wireless reception unit 211a. The demodulation unit 211c performs demodulation of a reception signal for a modulation symbol of the uplink channel by using a modulation scheme such as binary phase shift keying (BPSK) or quadrature phase shift keying (QPSK). The modulation scheme used by the demodulation unit 211c may be multilevel QAM such as 16-quadrature amplitude modulation (QAM), 64-QAM, or 256-QAM. The decoding unit 211d performs decoding processing on a coded bit of the demodulated uplink channel. Decoded uplink data and uplink control information are output to the control unit 24.

The transmission processing unit 212 performs transmission processing of downlink control information and downlink data. The transmission processing unit 212 includes a coding unit 212a, a modulation unit 212b, a multiplexing unit 212c, and a wireless transmission unit 212d.

The coding unit 212a codes the downlink control information and the downlink data input from the control unit 24 by using a coding method such as block coding, convolutional coding, or turbo coding. The modulation unit 212b modulates the coded bit output from the coding unit 212a by a predetermined modulation scheme such as BPSK, QPSK, 16-QAM, 64-QAM, or 256-QAM. The multiplexing unit 212c multiplexes a modulation symbol of each channel and a downlink reference signal, and maps them to a predetermined resource element. The wireless transmission unit 212d performs various kinds of signal processing on a signal from the multiplexing unit 212c. For example, the wireless transmission unit 212d performs processing such as conversion into the time domain by fast Fourier transform, addition of a guard interval, generation of a baseband digital signal, conversion into an analog signal, quadrature modulation, up-conversion, removal of extra frequency components, or power amplification. A signal generated by the transmission processing unit 212 is transmitted from the antenna 413.

The storage unit 22 is a storage device, from which data can be read and in which data can be written, such as a DRAM, an SRAM, a flash memory, or a hard disk. The storage unit 22 functions as storage means of the base station device 20.

The network communication unit 23 is a communication interface for communicating with other devices (for example, another base station device 20). For example, the network communication unit 23 is a local area network (LAN) interface such as a network interface card (NIC). The network communication unit 23 may be a universal serial bus (USB) interface including a USB host controller, a USB port, and the like. Further, the network communication unit 23 may be a wired interface or a wireless interface. The network communication unit 23 functions as network communication means of the base station device 20. The network communication unit 23 performs communication with another device under the control of the control unit 24.

The control unit 24 is a controller that controls each unit of the base station device 20. The control unit 24 is implemented by, for example, a processor such as a central processing unit (CPU) or a micro processing unit (MPU). For example, the control unit 24 is implemented in a manner in which the processor executes various programs stored in the storage device inside the base station device 20 by using a RAM or the like as a work area. Note that the control unit 24 may be implemented by an integrated circuit such as an application specific integrated circuit (ASIC) or a field programmable gate array (FPGA). The CPU, the MPU, the ASIC, and the FPGA can all be regarded as the controller.

As illustrated in FIG. 11, the control unit 24 includes a sensing unit 241 and a determination unit 242. The respective blocks (the sensing unit 241 and the determination unit 242) included in the control unit 24 are functional blocks indicating the respective functions of the control unit 24. These functional blocks may be software blocks or hardware blocks. For example, each of the above-described functional blocks may be one software module implemented by software (including a microprogram) or may be one circuit block on a semiconductor chip (die). It is a matter of course that each functional block may be one processor or one integrated circuit. A method of configuring the functional block is arbitrary. Note that the control unit 24 may be configured with a functional unit different from the above-described functional block.

Note that the control unit 45 of the terminal device 40 may have each functional block (the sensing unit 241 and the determination unit 242) included in the control unit 24 of the base station device 20. In this case, the term "base station device 20" appearing in the following description can be rephrased as the "terminal device 40" as appropriate. The terms "control unit 24", "sensing unit 241", and "determination unit 242" appearing in the following description can also be rephrased as the "control unit 45" as appropriate.

### (Antenna Configuration in NR)

Here, an antenna configuration in the NR will be described. For an antenna in the NR, a digital antenna configuration, an analog antenna configuration, and a hybrid antenna configuration in which the digital antenna configuration and the analog antenna configuration are combined are assumed.

The digital antenna configuration is a configuration in which an antenna weight of each antenna element is controlled by a digital circuit (baseband region).

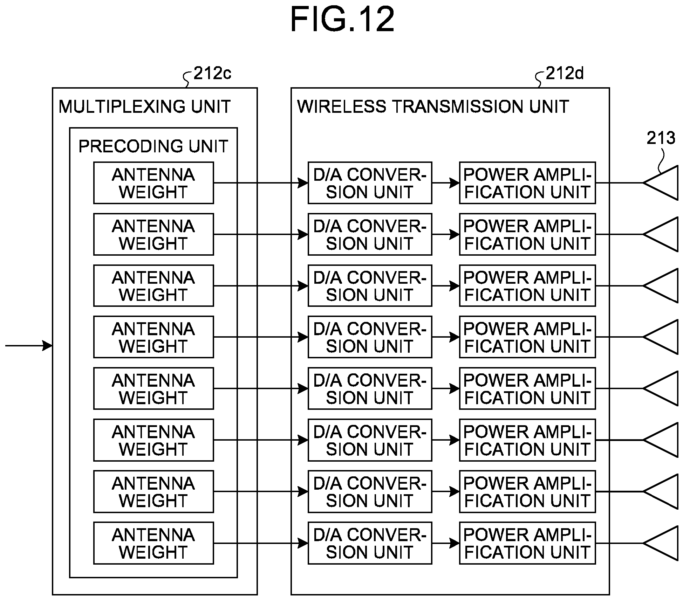

FIG. 12 is a schematic block diagram illustrating an example of the digital antenna configuration according to the embodiment of the present disclosure. FIG. 12 illustrates the multiplexing unit 212c, the wireless transmission unit 212d, and the antenna 213 in the configuration of the base station device 20 of FIG. 11. Note that processing unnecessary for the description of the basic configuration is omitted, but processing described in FIG. 11 is provided in each unit.

In the digital antenna configuration, the multiplexing unit 212c includes a precoding unit. In the precoding unit, each antenna element is multiplied by the antenna weight to form a beam.

In the digital antenna configuration, flexible phase control can be performed on each antenna element, and different beams can be generated in the frequency domain. On the other hand, the configuration is complicated.

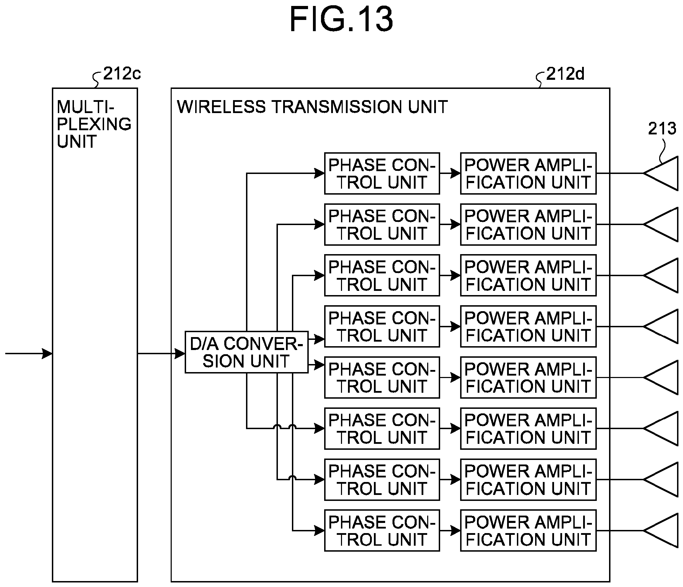

FIG. 13 is a schematic block diagram illustrating the digital antenna configuration according to the embodiment of the present disclosure. Similarly to FIG. 12, FIG. 13 illustrates the multiplexing unit 212c, the wireless transmission unit 212d, and the antenna 213 in the configuration of the base station device 20 of FIG. 10. Note that processing unnecessary for the description of the basic configuration is omitted, but processing described in FIG. 12 is provided in each unit.

In the analog antenna configuration, the wireless transmission unit 212d includes a phase control unit. The phase control unit rotates a phase in an analog region (RF region) to form a beam.

Flexible beam control is difficult because the phase is controlled in the analog region, but the configuration is simple. As an example, an antenna switching configuration is part of the analog antenna configuration.

The hybrid antenna configuration is a combination of the digital antenna configuration and the analog antenna configuration, and includes a phase control element in the analog region and a phase control element in the digital region. The hybrid antenna configuration has a characteristic that beamforming performance and configuration complexity are moderate with respect to those of the digital antenna configuration and the analog digital antenna configuration.

### <2.2. Configuration Example of Terminal Device>

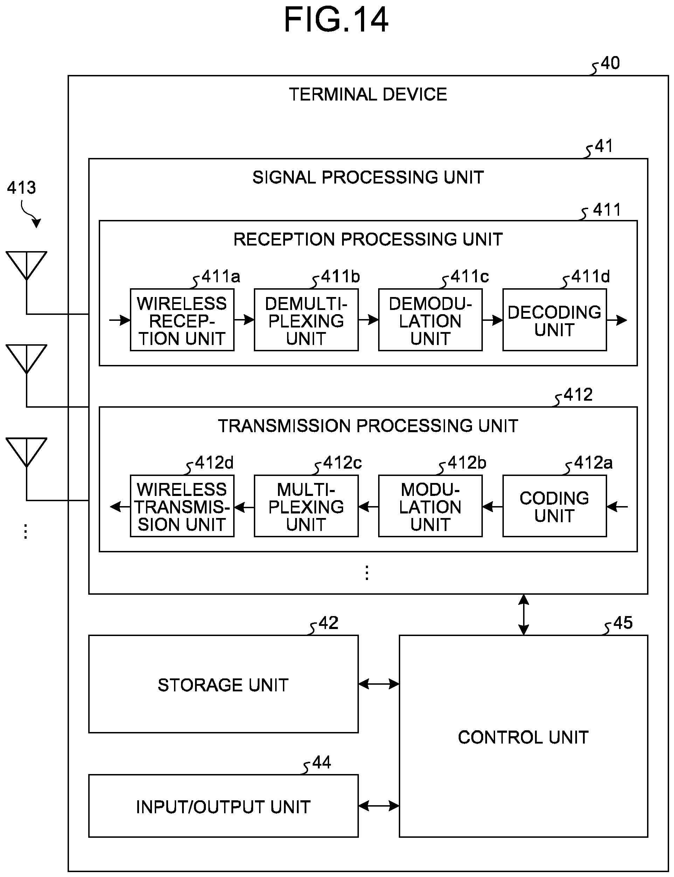

Next, the configuration of the terminal device 40 will be described. FIG. 14 is a diagram illustrating an example of the configuration of the terminal device 40 according to the embodiment of the present disclosure. The terminal device 40 is a communication device (wireless system) that performs wireless communication with the base station device 20. The terminal device 40 is a type of information processing device.

The terminal device 40 includes a wireless communication unit 41, a storage unit 42, an input/output unit 44, and the control unit 45. Note that the configuration illustrated in FIG. 14 is a functional configuration, and a hardware configuration may be different from this. Further, the functions of the terminal device 40 may be distributed to and implemented in a plurality of physically separated components.

The wireless communication unit 41 is a wireless communication interface that performs wireless communication with other communication devices (for example, the base station device 20 and another terminal device 40). The wireless communication unit 41 is operated under the control of the control unit 45. The wireless communication unit 41 supports one or more radio access schemes. For example, the wireless communication unit 41 supports both the NR and the LTE. The wireless communication unit 41 may support another radio access scheme such as W-CDMA or cdma2000.

The wireless communication unit 41 includes a reception processing unit 411, a transmission processing unit 412, and an antenna 313. The wireless communication unit 41 may include a plurality of reception processing units 411, a plurality of transmission processing units 412, and a plurality of antennas 313. Note that, in a case where the wireless communication unit 41 supports a plurality of radio access schemes, each unit of the wireless communication unit 41 can be individually configured for each radio access scheme. For example, the reception processing unit 411 and the transmission processing unit 412 may be individually configured for each of LTE and NR. The configurations of the reception processing unit 411 and the transmission processing unit 412 are similar to those of the reception processing unit 211 and the transmission processing unit 212 of the base station device 20.

The storage unit 42 is a storage device, from which data can be read and in which data can be written, such as a DRAM, an SRAM, a flash memory, or a hard disk. The storage unit 42 functions as storage means of the terminal device 40.

The input/output unit 44 is a user interface for exchanging information with the user. For example, the input/output unit 44 is an operation device for the user to perform various operations, such as a keyboard, a mouse, an operation key, or a touch panel. Alternatively, the input/output unit 44 is a display device such as a liquid crystal display or an organic electroluminescence (EL) display. The input/output unit 44 may be an audio device such as a speaker or a buzzer. Further, the input/output unit 44 may be a lighting device such as a light emitting diode (LED) lamp. The input/output unit 44 functions as input/output means (input means, output means, operation means, or notification means) of the terminal device 40.

The control unit 45 is a controller that controls each unit of the terminal device 40. The control unit 45 is implemented by, for example, a processor such as a CPU or an MPU. For example, the control unit 45 is implemented in a manner in which the processor executes various programs stored in the storage device inside the terminal device 40 by using a RAM or the like as a work area. Note that the control unit 45 may be implemented by an integrated circuit such as an ASIC or a FPGA. The CPU, the MPU, the ASIC, and the FPGA can all be regarded as the controller. Note that the control unit 45 may have each functional block included in the control unit 24 of the base station device 20.

### <2.3. Configuration Example of Communication Control Device>

The communication system 1 may include a communication control device 30. The communication control device 30 is a device that manages the base station device 20. For example, the communication control device 30 is a device that controls wireless communication of the base station device 20. For example, the communication control device 30 is a device that determines a communication parameter (also referred to as an operational parameter) to be used by the base station device 20 and gives permission or an instruction to the base station device 20.

At this time, the communication control device 30 may be a network manager that integrally controls wireless devices in the network. Taking ETSI EN 303 387 or IEEE 802.19.1-2014 as an example, the communication control device 30 may be a control device such as a spectrum manager/coexistence manager that performs a radio wave interference control between wireless devices. Furthermore, for example, a registered location secure server (RLSS) defined in IEEE 802.11-2016 can also serve as the communication control device 30. Furthermore, in a frequency sharing environment, a database (a database server, a device, or a system) such as a geolocation database (GLDB) or a spectrum access system (SAS) can also serve as the communication control device 30.

Note that in a case where the communication system 1 is a cellular communication system, the communication control device 30 may be a device configuring the core network 120. The core network 120 is, for example, evolved packet core (EPC) or 5G core network (5GC). In a case where the core network 120 is the EPC, the communication control device 30 may be, for example, a device having a function as a mobility management entity (MME). Furthermore, in a case where the core network 120 is the 5GC, the communication control device 30 may be, for example, a device having a function as an access and mobility management function (AMF) or a session management function (SMF). Note that even in a case where the communication system 1 is a cellular communication system, the communication control device 30 does not necessarily have to be a device configuring the core network 120. For example, the communication control device 30 may be a device having a function as a radio network controller (RNC).

Note that the communication control device 30 may have a function of a gateway. For example, in a case where the core network 120 is the EPC, the communication control device 30 may be a device having a function as a serving gateway (S-GW) or a packet data network gateway (P-GW). Further, in a case where the core network 120 is the 5GC, the communication control device 30 may be a device having a function as a user plane function (UPF). Furthermore, the communication control device 30 may be an SMF, a PCF, a UDM, or the like. The core network 120 may include an SMF, a PCF, a UDM, and the like.

Note that the communication control device 30 does not necessarily have to be a device configuring the core network 120. For example, it is assumed that the core network 120 is a core network of wideband code division multiple access (W-CDMA) or code division multiple access 2000 (cdma2000). At this time, the communication control device 30 may be a device that functions as the radio network controller (RNC).

The communication control device 30 may be connected to each of the plurality of base station devices 20. For example, in a case of the 5GC, an N2 reference point exists between an AMF and an NG-RAN, and the AMF and the NG-RAN are logically connected to each other via an NG interface.

The communication control device 30 manages communication of the base station device 20. For example, the communication control device 30 may manage the position of each terminal device 40 in units of areas (for example, tracking area and RAN notification area) including a plurality of cells. Note that the communication control device 30 may grasp and manage, for each terminal device 40, which base station device 20 (or which cell) the terminal device 40 is connected to, which base station device 20 (or which cell) the terminal device 40 exists in the communication area, and the like.

Basically, a control target of the communication control device 30 is the base station device 20, but the communication control device 30 may also control the terminal device 40 subordinate to the base station device 20. Furthermore, the communication control device 30 may control a plurality of secondary systems. In this case, the communication system 1 can be regarded as a system including a plurality of secondary systems.

Furthermore, a plurality of communication control devices 30 may be present in one communication system 1. For example, the communication control devices 30 may be arranged in a distributed manner. In this case, the plurality of communication control devices 30 exchange information of the base station device 20 managed thereby, and perform necessary frequency allocation or interference control calculation.

Further, the communication control device 30 may be a so-called master-slave device in which one communication control device centrally controls a plurality of communication control devices. In such a system, the master communication control device can control a plurality of slave communication control devices to intensively make a decision. In addition, the master communication control device can also perform delegation, discarding, and the like of a decision-making authority on each slave communication control device for the purpose of load distribution (load balancing) and the like.

Note that the communication control device 30 can also acquire necessary information from entities other than the base station device 20 and the terminal device 40 for its role. Specifically, the communication control device 30 can acquire information necessary for protection, such as position information of the primary system, from a database (regulatory database) managed and operated by a national or regional radio wave administration agency, for example. Examples of the regulatory database include a universal licensing system (ULS) operated by the Federal Communications Commissions of the United States. Other examples of the information necessary for protection may include an out-of-band emission (OOBE) limit, an adjacent channel leakage ratio (ACLR), adjacent channel selectivity, a fading margin, a protection ratio (PR), and/or the like. For these examples, it is desirable to use numerical values in a case where these numerical values are fixedly given in legislation.

Furthermore, as another example, it can be assumed that the communication control device 30 acquires radio wave sensing information from a radio wave sensing system installed and operated for the purpose of radio wave sensing in the primary system. As a specific example, the communication control device 30 can acquire radio wave sensing information of the primary system from a radio wave sensing system such as environmental sensing capability (ESC) in the CBRS of the United States. Furthermore, in a case where the communication device or the terminal has a sensing function, the communication control device 30 may acquire radio wave sensing information of the primary system from the communication device or the terminal.

The communication control device 30 is a device that controls wireless communication of the base station device 20. The communication control device 30 may control wireless communication of the terminal device 40 via the base station device 20 or in a direct manner. The communication control device 30 is a type of information processing device.

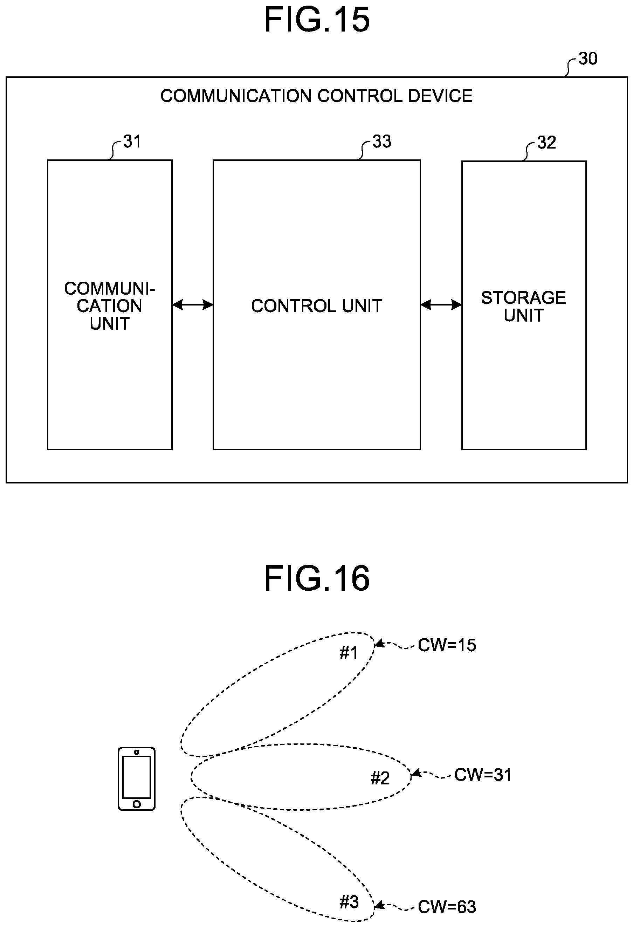

FIG. 15 is a diagram illustrating an example of a configuration of the communication control device 30 according to the embodiment of the present disclosure. The communication control device 30 includes a communication unit 31, a storage unit 32, and a control unit 33. Note that the configuration illustrated in FIG. 15 is a functional configuration, and a hardware configuration may be different from this. Further, the functions of the communication control device 30 may be distributed to and implemented in a plurality of physically separated components. For example, the communication control device 30 may include a plurality of server devices.

The communication unit 31 is a communication interface that communicates with other communication devices (for example, the base station device 20, the terminal device 40, and another communication control device 30). The communication unit 31 is operated under the control of the control unit 33.

The communication unit 31 can support a plurality of radio access schemes. For example, the communication unit 31 supports both the NR and the LTE. The communication unit 31 may support another radio access scheme such as W-CDMA or cdma2000. In this case, the configuration of the communication unit 31 is similar to that of the wireless communication unit 41 of the base station device 20.

Alternatively, the communication unit 31 may be a network interface or may be a device connection interface. For example, the communication unit 31 may be a local area network (LAN) interface such as a network interface card (NIC). The communication unit 31 may be a universal serial bus (USB) interface including a USB host controller, a USB port, and the like. Furthermore, the communication unit 31 may be a wired interface.

The storage unit 32 is a storage device, from which data can be read and in which data can be written, such as a DRAM, an SRAM, a flash memory, or a hard disk. The storage unit 32 functions as storage means of the communication control device 30.

The control unit 33 is a controller that controls each unit of the communication control device 30. The control unit 33 is implemented by, for example, a processor such as a CPU or an MPU. For example, the control unit 33 is implemented in a manner in which the processor executes various programs stored in the storage device inside the communication control device 30 by using a RAM or the like as a work area. Note that the control unit 33 may be implemented by an integrated circuit such as an ASIC or a FPGA. The CPU, the MPU, the ASIC, and the FPGA can all be regarded as the controller.

### <<3. Technical Features>>

As described above, currently, the LBT category 4 is applied to data transmission in the unlicensed band. Therefore, an unnecessary transmission delay may occur.

Therefore, in the communication system 1 according to the present embodiment, a channel access procedure (for example, LBT other than the LBT category 4) different from the first channel access procedure is applied as LBT for channel occupancy.

In the communication system 1, communication is performed by performing switching between the first channel access procedure and the channel access procedure different from the first channel access procedure according to a predetermined condition.

The first channel access procedure and the channel access procedure different from the first channel access procedure are different in at least one or more of the following LBT parameters.
- Contention window size
- Contention window size adjustment method
- Value of backoff counter
- Sensing slot length
- Cycle prefix (CP) extension length
- Timing of start or end of sensing
- LBT scheme
- Maximum channel occupancy time
- Energy detection threshold
- Preamble detection threshold

Examples of a difference between the first channel access procedure and the channel access procedure different from the first channel access procedure will be described below.

As an example, a difference between the first channel access procedure and the channel access procedure different from the first channel access procedure is the LBT category. The first channel access procedure is the LBT category 4, and the channel access procedure different from the first channel access procedure is an LBT category other than the LBT category 4. More specifically, in the communication system 1, communication is performed by performing switching between the LBT category 4 and an LBT category (for example, LBT category 3) other than the LBT category 4 according to a predetermined condition. A category other than the LBT category 4 may be the LBT category 1 or the LBT category 2. Alternatively, an LBT scheme defined in a category other than the LBT categories 1 to 3 may be used.

As an example, a difference between the first channel access procedure and the channel access procedure different from the first channel access procedure is adjustment of the contention window size. The first channel access procedure is LBT with adjustment of the contention window size, and the channel access procedure different from the first channel access procedure is LBT without adjustment of the contention window size. More specifically, in the communication system 1, communication is performed by performing switching between the LBT with adjustment of the contention window size and the LBT without adjustment of the contention window size according to a predetermined condition.

As an example, a difference between the first channel access procedure and the channel access procedure different from the first channel access procedure is a backoff value. The first channel access procedure is LBT with random backoff, and the channel access procedure different from the first channel access procedure is LBT with fixed-value backoff. More specifically, in the communication system 1, communication is performed by performing switching between the LBT with random backoff and the LBT with fixed-value backoff according to a predetermined condition.

Note that, in the following, the LBT category 4 and the LBT category 3 will be described, but the technical features and equivalent effects can be achieved even if an example of a difference between the first channel access procedure and the channel access procedure different from the first channel access procedure is applied.

### <3.1. Condition for Application of LBT Category>

Hereinafter, a condition for selecting the LBT category 3, in other words, switching between the LBT category 3 and the LBT category 4 will be described.

### (Laws)

For example, the LBT category 3 is selected on condition that non-use of other radio access technologies is guaranteed for a long period of time by laws, standards, or the like.

Specifically, in a case where it is not guaranteed for a long period of time that there are no other radio access technologies (for example, wireless LAN or the like), the LBT category 4 is applied to transmission by the initiating device (base station device 20 or terminal device 40). On the other hand, in a case where it is guaranteed for a long period of time that there are no other radio access technologies, the LBT category 3 may be applied to transmission by the initiating device (base station device 20 or terminal device 40).

Here, a case where it is guaranteed for a long period of time that there are no other radio access technologies is, for example, a case where the non-use of other radio access technologies in the frequency band (channel or component carrier) is guaranteed by laws.

Alternatively, in a case where it is determined by laws to apply LBT other than the LBT category 4, the determined LBT category is selected.

For example, in a case where it is determined by laws to apply the LBT category 3, the LBT category 3 is applied to transmission by the initiating device (base station device 20 or terminal device 40).

Since the laws differ depending on the frequency band, the LBT category to be applied may differ depending on the frequency band.

Specifically, for example, in the unlicensed band of 60 GHz, the LBT category 3 may be applied to transmission by the initiating device, and in the unlicensed bands of 5 GHz and 6 GHz, the LBT category 4 may be applied to transmission by the initiating device.

In addition, the application of the LBT category may differ depending on the country since the laws differ depending on the country.

Specifically, for example, in Europe, the LBT category 4 may be applied to transmission by the initiating device, and in the United States, the LBT category 3 may be applied to transmission by the initiating device.

As an example, location information may be used to determine the country for operation. The country for operation can be specified based on the coordinates (latitude and longitude) of the base station device 20 or the terminal device 40. As a method of acquiring the coordinates, for example, a global navigation satellite system (GNSS) or the like is used.

As an example, public land mobile network (PLMN) identity may be used to determine the country for operation. The PLMN identity is broadcasted from the base station device 20 by being included in cell access related information of the SIB1. The terminal device 40 can determine the country for operation by a mobile century code (MCC) included in the PLMN identity.

As described above, in a case where it is guaranteed that there are no other communication devices that use other radio access technologies, that is, it is guaranteed that there are no other communication devices that perform channel sensing in the same manner as the LBT category 4, communication using LBT (for example, the LBT category 3) different from the LBT category 4 is performed.

### (Instruction from Higher Layer)

### · Core network

For example, the base station device 20 or the terminal device 40 may select the LBT category 3 or 4 based on an instruction from the core network 12 as a higher layer. In this case, the LBT categories of the base station device 20 and the terminal device 40 are determined based on an instruction related to LBT parameter control from the core network 12.

The instruction related to the LBT parameter control may be made by any of the AMF 139, the SMF 136, the NEF 132, the NRF 133, the UDM 137, the AUSF 131, the PCF 135, the AF 138, and the UPF 150 (see FIG. 2). Alternatively, a new function of controlling the LBT parameter may issue an instruction related to the LBT parameter control.

As an example, a case where the LBT parameter is controlled based on the location information of the terminal from the AMF 139 responsible for mobility management will be described. Here, it is assumed that the AMF 139 determines the LBT category 3 to be selected based on the location information of the terminal device 40. In this case, for example, the base station device 20 or the terminal device 40 is instructed to apply the LBT category 3 in a case where the terminal device 40 moves to a predetermined area. On the other hand, in a case where the terminal device 40 is present in an area other than the predetermined area, the base station device 20 or the terminal device 40 is instructed to apply the LBT category 4.

### · OAM

Alternatively, the base station device 20 or the terminal device 40 may select the LBT category 3 or 4 based on an instruction from, for example, an operations, administration, and management (OAM) function (not illustrated) as the higher layer. In this case, the LBT categories of the base station device 20 and the terminal device 40 are determined based on an instruction related to LBT parameter control from the OAM. Note that the OAM function is a maintenance operation management function in the network. The OAM function may be implemented in a core network (EPC or NG core), the base station device 20, or other communication control devices (for example, the communication control device 30).

The OAM function acquires, for example, information regarding a communication environment from the base station device 20 and/or the terminal device 40, and determines the LBT parameter to be applied by each base station device 20 and/or each terminal device 40. The OAM function instructs the base station device 20 and/or the terminal device 40 to perform setting related to the LBT parameter.

For example, the OAM function instructs the base station device 20 and the terminal device 40 with less interference to apply the LBT category 3, and instructs the base station device 20 and the terminal device 40 with more interference to apply the LBT category 4.

### · Application layer

Alternatively, the base station device 20 or the terminal device 40 may select the LBT category 3 or 4 based on an instruction from, for example, an application layer as the higher layer.

For example, in data transmission in an operation with high urgency, the LBT category 3 (or LBT category 2) with a small delay is applied. For example, in data transmission of information with low urgency, the LBT category 4 with a large delay is applied.

### (Instruction from Communication Control Device)

For example, the base station device 20 or the terminal device 40 may select the LBT category 3 or 4 based on an instruction from the communication control device 30. In this case, the LBT categories of the base station device 20 and the terminal device 40 are determined based on an instruction related to the LBT parameter control from the communication control device 30.

### (Instruction from Base Station Device)

For example, the terminal device 40 (or relay station) may select the LBT category 3 or 4 based on an instruction from the base station device 20.

In this case, the base station device 20 issues an instruction related to the LBT parameter control based on, for example, RRC signalling. The base station device 20 indicates the LBT category by a parameter related to the LBT category in RRC. When configured or reconfigured by the RRC, a parameter related to the previous LBT category is overwritten.

Alternatively, the base station device 20 may issue an instruction related to the LBT parameter control based on the DCI, for example. The base station device 20 indicates the LBT category by a parameter related to the LBT category included in the DCI. The base station device 20 may notify of the DCI by using a PDCCH of each terminal device 40. Alternatively, the base station device 20 may set a plurality of terminal devices 40 as one group and notify of the DCI by using a PDCCH common to the group. The PDCCH of each terminal device 40 is arranged in a UE-specific search space (USS), and the PDCCH common to the group is arranged in a common search space (CSS).

For example, the base station device 20 may issue an instruction related to the LBT parameter control based on a MAC CE. The base station device 20 indicates the LBT category by a parameter related to the LBT category included in the MAC CE.

The base station device 20 may issue an instruction regarding the LBT parameter control based on, for example, the SIB. The base station device 20 indicates the LBT category by a parameter related to the LBT category included in the SIB. Note that the parameter regarding the LBT category notified by the SIB may be overwritten by the RRC signalling.

For example, the base station device 20 may issue an instruction related to the LBT parameter control based on a predetermined signal sequence. The base station device 20 indicates the LBT category by a parameter related to the LBT category corresponding to a signal sequence of a predetermined signal. Examples of the predetermined signal include an SS/PBCH block, a CSI-RS, a DMRS of a PDCCH, a preamble signal transmitted at the head of a transmission burst, a reservation signal, and the like.

Note that the base station device 20 may issue an instruction regarding the LBT parameter control by combining the above-described signalling. For example, the base station device 20 notifies of a set of parameters related to the LBT category by the RRC, and indicates one in the set by the DCI. Alternatively, the base station device 20 notifies of a set of parameters related to the LBT category by the RRC, and indicates one in the set by the MAC CE.

For example, the base station device 20 designates the LBT category, the contention window size adjustment method, and/or the contention window size as the information regarding the LBT parameter control. As a method of issuing an explicit instruction, for example, the base station device 20 designates the LBT category and the contention window size in association with a parameter (field) related to channel access.

As an example, the base station device 20 designates the LBT category by a value of a predetermined field indicating the LBT category, the contention window size adjustment method, and/or the contention window size (an index of the LBT parameter). Specifically, the base station device 20 designates the LBT category, the contention window size adjustment method, and/or the contention window size according to Table 4. The terminal device 40 performs the LBT before transmission of a physical signal/physical channel by using the LBT category indicated by the predetermined field.

**(Table 4)**

| LBT parameter index | LBT category | Contention window size |
|---|---|---|
| 1 | LBT category 3 | 15 |
| 2 | LBT category 3 | 31 |
| 3 | LBT category 3 | 63 |
| 4 | LBT category 4 | - |

As another example of designating the LBT category, application/non-application of a contention window adjustment procedure and the like can be cited. This field is designated, for example, for uplink configured grant PUSCH transmission, PRACH transmission, MsgA (PRACH and PUSCH) transmission, semi-persistent PUCCH transmission, sidelink physical signal/physical channel transmission, and the like.

In addition, as another example of designating the LBT category, there is an example of designating the LBT category for uplink PUSCH transmission in association with a ChannelAccess-CPext field or ChannelAccess-CPext-CAPC field included in an uplink grant (for example, DCI format 0_0 or DCI format 0_1). For example, the base station device 20 notifies of the ChannelAccess-CPext field or ChannelAccess-CPext-CAPC field and the LBT category, the contention window size adjustment method, and/or the contention window size in association with each other. After receiving the uplink grant, the terminal device 40 performs the LBT before PUSCH transmission by using the LBT category indicated in the ChannelAccess-CPext field or ChannelAccess-CPext-CAPC field.

As another example of designating the LBT category, there is an example of designating the LBT category for uplink PUCCH transmission in association with the ChannelAccess-CPext field included in a downlink grant (for example, DCI format 1_0 or DCI format 1_1). For example, the base station device 20 notifies of the ChannelAccess-CPext field in association with the LBT category, the contention window size adjustment method, and/or the contention window size. After receiving the downlink grant, the terminal device 40 performs the LBT before PUCCH transmission by using the LBT category indicated in the ChannelAccess-CPext field.

As a method of issuing an implicit instruction, the base station device 20 designates the LBT category and the contention window size in association with other parameters (fields) and physical parameters.

For example, the base station device 20 designates the LBT parameter in association with the index of a control resource set (CORESET) used for PDCCH transmission. In other words, the LBT parameter is individually set for each of downlink transmission and corresponding uplink transmission with different CORESETs. As a specific example, different contention window sizes are set for different CORESETs. Different contention window sizes are applied for PDCCH transmission and corresponding uplink transmission with different CORESETs.

For example, the base station device 20 designates the LBT parameter in association with the index of a search space in which the PDCCH is arranged. In other words, the LBT parameter is individually set for each of downlink transmission and corresponding uplink transmission with different search spaces. As a specific example, different contention window sizes are set for different search spaces. Different contention window sizes are applied to PDCCH transmission and corresponding uplink transmission with different search spaces. Further, for example, the LBT parameter is different between the CSS and the USS. Beamforming-based LBT is not applied to the CSS, and the beamforming-based LBT is applied to the USS.

For example, the base station device 20 designates the LBT parameter based on the type of a radio network temporary identifier (RNTI) of the PDCCH. In other words, the LBT parameter is individually set for each of downlink transmission and corresponding uplink transmission with different RNTIs. As a specific example, different contention window sizes are set for different RNTIs. Different contention window sizes are applied to PDCCH transmission and corresponding uplink transmission with different RNTIs.

The base station device 20 may indicates the LBT parameter other than the LBT category. Examples of the LBT parameter include the following information.
- Information regarding contention window size adjustment method
- Value of backoff counter
- Sensing slot length
- Cycle prefix (CP) extension length
- Transmission start timing
- Timing of start or end of sensing
- LBT scheme (beamforming-based LBT or receiver assisted LBT)
- Information for designating whether to perform dynamic channel access or semi-static channel access.
- Channel access priority class
- Maximum channel occupancy time
- Energy detection threshold
- Preamble detection threshold

Examples of the information regarding the contention window size adjustment method include the length of the contention window (contention window size), a possible value of the contention window, the reference period, and the like. The length of the contention window indicates, for the LBT category 3, a contention window size used in a fixed manner. On the other hand, in a case of the LBT category 4, an initial value of the contention window size, a maximum value of the contention window size, an increased amount of the contention window, and the like are designated.

The possible value of the contention window as the increased amount of the contention window follows, for example, the formula CW = 16 · (n + 1) - 1 (n is the number of times the value of the contention window is updated). As a specific example, {15, 31, 47, 63} is used. Note that the base station device 20 may indicate a value obtained from the formula or may indicate the above formula.

The base station device 20 may indicate the position of the reference period and the length of the period. Note that, in a case where no setting related to the reference period is made, the default reference period (that is, the first slot in which at least one unicast PDSCH is included in the channel occupancy time) is applied.

As the value of the backoff counter, for example, the value of the counter applied in the first channel access procedure is indicated. Furthermore, as the sensing slot length, for example, the length of the first, second, third, and/or fourth waiting time is indicated.

As the CP extension length, for example, the length of a CP of a PUSCH and/or PUCCH is indicated. As the transmission start timing, for example, a transmission start timing of a PUSCH and/or PUCCH is indicated. Furthermore, as the sensing timing, for example, a sensing start timing is indicated.

As the LBT scheme, for example, application of a channel access procedure different from the first, second, and third channel access procedures is indicated. Here, the different channel access procedure is, for example, the beamforming-based LBT, the receiver assisted LBT, or the like.

Either dynamic channel access or semi-static channel access may be indicated from the base station device 20. Further, as the channel access priority class, for example, a channel access priority class that may be transmitted from the base station device 20 is indicated. Alternatively, a channel access priority class that cannot be transmitted from the base station device 20 is indicated.

For example, the maximum channel occupancy time, a threshold of power applied to signal detection, and a threshold of power used for preamble detection are indicated from the base station device 20. The information regarding the threshold of power may be notified in association with information regarding transmission power of the base station device 20 (referenceSignalPower). Alternatively, the terminal device 40 may determine a threshold by using the transmission power of the base station device 20, the transmission power of the terminal device 40, and/or the information regarding the threshold of power, and perform the LBT by using the threshold.

### (Detection Information)

For example, the base station device 20 or the terminal device 40 may select the LBT category 3 or 4 based on information detected thereby. In this case, the base station device 20 or the terminal device 40 detects information necessary for determining the LBT category, and determines the LBT category based on the detected information. Note that, although a case where the base station device 20 determines the LBT category will be described below, the terminal device 40 can similarly determine the LBT category.

For example, the base station device 20 determines the LBT category according to whether or not the presence of another device has been detected. The another device is a device using another radio access technology, and is, for example, a wireless device compliant with 802.11ad or 802.11ay as other radio access technology.

The base station device 20 detects the presence of another device by using a signal detection method such as received power intensity or decoding, for example. More specifically, for example, in a case where the received power intensity of a predetermined signal exceeds a threshold, the base station device 20 determines that the predetermined signal has been detected, and determines that the presence of another device has been detected. Alternatively, in a case where the predetermined signal is successfully decoded, the base station device 20 determines that the predetermined signal has been detected, and determines that the presence of another device has been detected.

The base station device 20 selects the LBT category 4 in a case where the presence of another device has been detected, and selects the LBT category 3 in a case where the presence of another device has not been detected.

Alternatively, the base station device 20 may determine the LBT category according to whether or not the presence of a device to which the LBT category 4 is applied has been detected. The device to which the LBT category 4 is applied is, for example, a device compliant with 802.11ad or 802.11ay.

For example, in a case where a preamble signal transmitted from a wireless device compliant with 802.11ad or 802.11ay has been detected, the base station device 20 determines that the presence of the device to which the LBT category 4 is applied has been detected. The base station device 20 selects the LBT category 4 in a case where the presence of the device to which the LBT category 4 is applied has been detected, and selects the LBT category 3 in a case where the presence of the device to which the LBT category 4 is applied has not been detected.

Alternatively, for example, in a case where an IEEE 802.11 WLAN received signal strength indicator (RSSI) equal to or greater than a predetermined value, the base station device 20 determines that the presence of the device to which the LBT category 4 is applied has been detected. The base station device 20 selects the LBT category 4 in a case where the presence of the device to which the LBT category 4 is applied has been detected, and selects the LBT category 3 in a case where the presence of the device to which the LBT category 4 is applied has not been detected. The IEEE 802.11 WLAN RSSI is, for example, an RSSI measured from a beacon, a DMG beacon, FILS discovery frames, probe response frames, or the like.

Alternatively, the base station device 20 may determine the LBT category according to whether or not the presence of an NR-U device has been detected.

For example, in a case where a physical signal and/or physical channel specific to the NR-U has been detected, the base station device 20 determines that the presence of another NR-U device has been detected. For example, in a case where an SS/PBCH block or CSI-RS has been detected, the base station device 20 determines that the presence of another NR-U device has been detected. Alternatively, for example, in a case where an SRS or a PUCCH has been detected, the base station device 20 determines that the presence of another NR-U device has been detected.

In a case where the presence of another NR-U device has been detected, the base station device 20 determines to apply the LBT parameter (such as the LBT category) applied by another NR-U device. For example, the base station device 20 selects the LBT category 4 in a case where another NR-U device applies the LBT category 4, and selects the LBT category 3 in a case where another NR-U device applies the LBT category 3.

Alternatively, the base station device 20 may determine the LBT category based on information from another device. The information from another device is carried, for example, by a broadcast channel/broadcast signal or a sidelink physical channel/physical signal.

For example, the base station device 20 determines the LBT category based on information related to the LBT parameter as the information from another device. Examples of the information related to the LBT parameter include information on the LBT category, the contention window size, and the like. In this case, the base station device 20 selects the detected LBT parameter.

Alternatively, the base station device 20 may determine the LBT category based on information related to a device type as the information from another device. Examples of the information related to the device type include information for RAT notification. In this case, the base station device 20 selects the LBT category to be applied in the notified RAT. For example, in a case where the notified RAT is 802.11ad or 802.11ay, the base station device 20 selects the LBT category 4.

### (Measurement Information)

For example, the base station device 20 or the terminal device 40 may select the LBT category 3 or 4 based on information measured thereby. Note that, although a case where the base station device 20 determines the LBT category will be described below, the terminal device 40 can similarly determine the LBT category.

### (1) Communication Status

For example, the base station device 20 determines the LBT category based on a communication status.

### (1-1) HARQ-ACK Result

The base station device 20 determines the LBT category based on, for example, an HARQ-ACK result. The base station device 20 determines the LBT category based on, for example, a ratio between ACK/NACK as the HARQ-ACK result. Specifically, the base station device 20 determines the LBT parameter based on, for example, a ratio between ACK and NACK of a PDSCH. Alternatively, the base station device 20 determines the LBT parameter based on a ratio between ACK and NACK of a PUSCH.

For example, the base station device 20 selects the LBT category 3 in a case where the proportion of ACK is equal to or more than a predetermined value, and selects the LBT category 4 in a case where the proportion of the ACK is less than the predetermined value. Alternatively, the base station device 20 selects the LBT category 3 in a case where the proportion of NACK is less than a predetermined value, and selects the LBT category 4 in a case where the proportion of NCK is equal to or more than the predetermined value.

Alternatively, the base station device 20 determines the LBT category based on, for example, the number of consecutive ACKs or NACKs. Specifically, the base station device 20 determines the LBT parameter based on, for example, the number of consecutive ACKs or NACKs of a PDSCH. Alternatively, the base station device 20 determines the LBT parameter based on the number of consecutive ACKs or NACKs of a PUSCH.

In this manner, the base station device 20 selects the LBT category according to the ratio between ACK/NACK and the number of consecutive ACKs/NACKs. Note that, once NACK is received, the base station device 20 can retransmit a transmission signal. In this case, it can also be said that the base station device 20 selects the LBT category according to the number of times of retransmission.

For example, the base station device 20 selects the LBT category 3 in a case where the number of consecutive ACKs is equal to or more than a predetermined value, and selects the LBT category 4 in a case where the number of consecutive ACKs is less than the predetermined value. Alternatively, the base station device 20 selects the LBT category 3 in a case where the number of consecutive NACKs is less than a predetermined value, and selects the LBT category 4 in a case where the number of consecutive NCKs is equal to or more than the predetermined value.

### (1-2) Sensing Result

The base station device 20 determines the LBT category based on, for example, a sensing result. The base station device 20 determines the LBT category based on, for example, the number of times the result indicates "clear" and the number of times the result indicates "busy" as the sensing result.

Specifically, the base station device 20 determines the LBT parameter based on, for example, a ratio between "clear" and "busy". For example, the base station device 20 selects the LBT category 3 in a case where the proportion of "clear" is equal to or more than a predetermined value, and selects the LBT category 4 in a case where the proportion of "clear" is less than the predetermined value. Alternatively, the base station device 20 selects the LBT category 3 in a case where the proportion of "busy" is less than a predetermined value, and selects the LBT category 4 in a case where the proportion of "busy" is equal to or more than the predetermined value.

Alternatively, the base station device 20 determines the LBT category based on, for example, the frequency of being busy (for example, the number of consecutive results indicating "busy"). For example, the base station device 20 selects the LBT category 3 in a case where the number of consecutive results indicating "busy" is less than a predetermined value, and selects the LBT category 4 in a case where the number of consecutive results indicating "busy" is equal to or more than the predetermined value.

Alternatively, the base station device 20 determines the LBT category based on, for example, a power value detected by sensing. For example, the base station device 20 selects the LBT category 3 in a case where the detected power value is less than a predetermined value, and selects the LBT category 4 in a case where the detected power value is equal to or more than the predetermined value.

### (2) Measurement Information or Measurement Feedback Information

For example, the base station device 20 or the terminal device 40 determines the LBT category based on measurement. For example, the terminal device 40 determines the LBT category based on a CSI measurement result. The base station device 20 determines the LBT category based on, for example, a fed back CSI measurement result. For example, the base station device 20 selects the LBT category 3 in a case where the channel quality is high (for example, a channel quality indicator (CQI), a layer indicator (LI), a rank indicator (RI), L1-RSRP, or L1-SINR indicates a predetermined value or more) as the CSI measurement result, and selects the LBT category 4 in a case where the channel quality is low (for example, the CQI, the LI, the RI, the L1-RSRP, or the L1-SINR indicates a value less than the predetermined value).

Alternatively, the terminal device 40 determines the LBT category based on a RLM measurement result, for example. For example, the terminal device 40 selects the LBT category 3 in a case where the channel quality is high (a radio link quality measured in a predetermined period indicates a predetermined value or more) as the RLM measurement result, and selects the LBT category 4 in a case where the channel quality is low (the radio link quality measured in the predetermined period indicates a value less than the predetermined value). Note that the terminal device 40 may transmit the RLM measurement result (that is, the radio link quality) to the base station device 20, and the base station device 20 may determine the LBT category by an operation similar to that of the terminal device 40.

The base station device 20 or the terminal device 40 may determine the LBT category based on, for example, an RRM measurement result. For example, the terminal device 40 determines the LBT category based on the RRM measurement result (SS-RSRP, CSI-RSRP, SS-RSRQ, CSI-RSRQ, SS-SINR, CSI-SINR, or the like). The base station device 20 determines the LBT category based on the RRM measurement result reported from the terminal device 40. In a case where the channel quality is high (the RRM measurement result indicates a predetermined value or more), the LBT category 3 is selected, and in a case where the channel quality is low (the RRM measurement result indicates a value less than the predetermined value), the LBT category 4 is selected.

The base station device 20 or the terminal device 40 may determine the LBT category based on, for example, an RSSI measured in an RSSI measurement timing configuration (RMTC) and/or a channel occupancy result. For example, the terminal device 40 may determine the LBT category based on the RSSI measured in the RMTC and/or the channel occupancy result. The base station device 20 determines the LBT category based on the RSSI measured in the RMTC and/or the channel occupancy reported from the terminal device 40. In a case where the channel quality is high (the RSSI indicates a value less than a predetermined value, and the channel occupancy result indicates a value less than a predetermined value), the LBT category 3 is selected, and in a case where the channel quality is low (the RSSI indicates the predetermined value or more, and the channel occupancy result indicates a value less than the predetermined value), the LBT category 4 is selected. The channel occupancy is defined by a proportion of the number of samples in which the RSSI exceeds a set value (channelOccupancyThreshold).

Furthermore, the base station device 20 may determine the LBT category based on a CLI measurement result, for example. For example, the terminal device 40 determines the LBT category based on a CLI-RSSI. For example, the base station device 20 determines the LBT category based on the CLI-RSSI reported from the terminal device 40. In a case where the channel quality is high (the CLI-RSSI indicates a value less than a predetermined value), the LBT category 3 is selected, and in a case where the channel quality is low (the CLI-RSSI indicates a predetermined value or more), the LBT category 4 is selected.

Based on the measurement feedback information, the base station device 20 selects the LBT category 3 in a case where the channel quality is high, that is, the number of other devices serving as interference sources is small, and selects the LBT category 4 in a case where the channel quality is low, that is, the number of other devices serving as interference sources is large.

### (Others)

Other than the examples described above, the base station device 20 or the terminal device 40 desirably selects the LBT category 4.

For example, in a case where the terminal device 40 determines the LBT category according to an instruction/setting from the base station device 20, and no instruction/setting is made from the base station device 20, the terminal device 40 selects the LBT category 4. On the other hand, in a case where an instruction/setting is made from the base station device 20, the terminal device 40 selects the LBT category according to the instruction/setting from the base station device 20.

For example, in a case where the base station device 20 determines the LBT category according to an instruction/setting from the communication control device 30, and no instruction/setting is made from the communication control device 30, the base station device 20 selects the LBT category 4. On the other hand, in a case where an instruction/setting is made from the communication control device 30, the base station device 20 selects the LBT category according to the instruction/setting from the communication control device 30.

In this manner, the LBT category 4 is applied by the base station device 20 or the terminal device 40 by default.

Furthermore, for example, in a case where the terminal device 40 determines the LBT category according to an instruction/setting from the base station device 20, and in a case where a new instruction/setting is not made from the base station device 20 until a predetermined period (timer) elapses, the terminal device 40 selects the LBT category 4. The timer starts, for example, from a timing at which an instruction/setting related to the LBT parameter is made or a timing at which an instruction/setting related to the LBT parameter is applied.

### <3.2. Setting of LBT Parameter>

The LBT parameter may be set for each communication device such as the base station device 20 or the terminal device 40, or may be set for each communication parameter.

### (QoS Level)

For example, the LBT parameter may be individually set for a QoS level (5G QoS identifier (5QI)) or channel access priority class).

For example, the base station device 40 and the terminal device 40 individually hold the value of the contention window with respect to the channel access priority class. The terminal device 40 can apply different contention window values to different channel access priority classes.

Similarly, also for the contention window adjustment procedure, the base station device 40 and the terminal device 40 may apply different contention window adjustment procedures to different channel access priority classes. For example, a new channel access priority class (for example, a channel access priority class 0) is defined for data of a delay request of 0.5 msec or less or data of an equivalent delay request. A new 5QI index indicating a predetermined delay request value is classified as the channel access priority class 0. For the channel access priority class 0, the LBT category 3 or the LBT category 2 may be applied.

### (Beam)

For example, in a case of the beamforming-based LBT (directional LBT), the LBT parameter may be set individually for a beam.

Here, a reception beam in the beamforming-based LBT is defined by, for example, the following.
- Reception beam corresponding to transmission beam of terminal device 40
- Reception beam corresponding to downlink reception beam
- Direction of main lobe (elevation angle and azimuth angle) and half-power angle of main lobe
- AoA(Angle of Arrival)/AoD(Angle of Departure)
- Beam pattern set by terminal device 40

As the reception beam corresponding to the transmission beam of the terminal device 40, for example, a reception beam that is directed in the same direction as or is wider than the transmission beam such as a PUSCH, a PUCCH, a PRACH, or an SRS is formed. In a case where an instruction of uplink transmission has been made, the terminal device 40 performs the beamforming-based LBT by using a reception beam in the same direction as the transmission beam.

The reception beam corresponding to the downlink reception beam includes a reception beam corresponding to reception of an SS/PBCH block or CSI-RS. The reception beam corresponding to the reception of the SS/PBCH block or CSI-RS is a reception beam in which received power (RSRP) of the SS/PBCH block or CSI-RS is maximum, or a reception beam in which the received power (RSRP) is equal to or more than a predetermined value. In a case where an SS/PBCH block index or a CSI-RS index is designated, the terminal device 40 performs the beamforming-based LBT by using a reception beam corresponding to reception of the SS/PBCH block or CSI-RS.

The reception beam is defined by, for example, the direction of the main lobe (elevation angle and azimuth angle) and the half-power angle of the main lobe. The direction of the main lobe is represented by an elevation angle and an azimuth angle from a reference point, and the beam width is represented by the half-power angle. The reference point may be a direction determined by the base station device 20 or the terminal device 40, the position of the base station device 20, or a direction designated by the base station device 20. The terminal device 40 performs the beamforming-based LBT according to the indication of the direction of the main lobe (elevation angle and azimuth angle) and the half-power angle of the main lobe.

As for the beam pattern set by the terminal device 40, for example, a plurality of patterns of a predetermined reception beam and/or a predetermined transmission beam are formed by the terminal device 40. The plurality of patterns are reported to the base station device 20 as, for example, capability information. The base station device 20 designates an index corresponding to the reception beam pattern or the transmission beam pattern for the terminal device 40, thereby controlling the reception beam applied in the beamforming-based LBT of the terminal device 40.

### · Contention Window

For example, the base station device 20 and the terminal device 40 may set the contention window value for each beam. This will be described with reference to FIGS. 16 to 18. FIGS. 16 to 18 are diagrams for describing a relationship between the beam and the contention window according to the embodiment of the present disclosure.

A first control method for the contention window will be described. As illustrated in FIG. 16, the base station device 40 and the terminal device 40 may individually set the contention window size for each direction (beam). In the example of FIG. 16, the base station device 40 and the terminal device 40 set a contention window size CW = 15 for a beam #1, set a contention window size CW = 31 for a beam #2, and set a contention window size CW = 63 for a beam #3.

As such, different contention window sizes can be applied for different directions and beam widths. That is, the value of the contention window CW is controlled specifically for each beam. Specifically, the value of the contention window CW is controlled as CW_{p,b}, in which the index of the channel access priority class is p and the index of the beam is b. In this case, the maximum value of the contention window (CW_{min,p}) and the minimum value of the contention window (CW_{max,p}) are likewise defined specifically for each beam. Specifically, the maximum value of the contention window and the minimum value of the contention window for each beam are expressed as CW_{min,p,b} and CW_{max,p,b}.

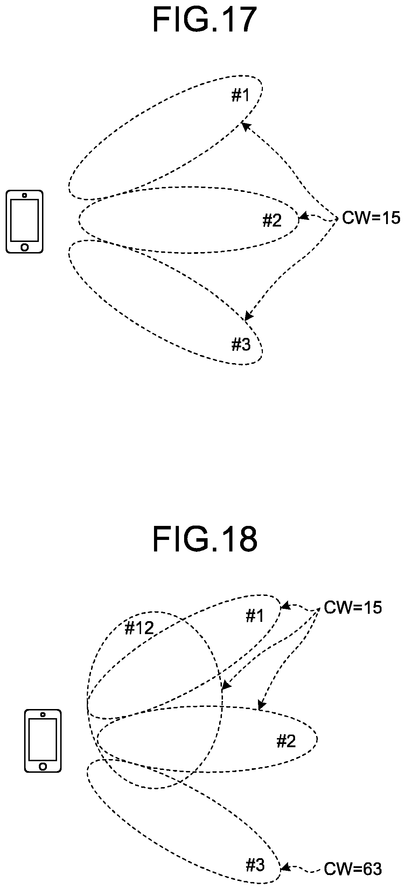

A second control method for the contention window will be described. As illustrated in FIG. 17, the base station device 40 and the terminal device 40 may set the same contention window size for each direction (beam). In the example of FIG. 17, the base station device 40 and the terminal device 40 set the contention window size CW = 15 for the beams #1 to #3.

In this manner, a common contention window size may be applied for all directions and beam widths. That is, the value of the contention window CW is controlled common to the beams. Specifically, the value of the contention window CW is controlled as CWₚ, in which the index of the channel access priority class is p.

A second control method for the contention window will be described. As illustrated in FIG. 18, the terminal device 40 may divide a plurality of beams into groups including one or more beams, and set the contention window size for each group. In FIG. 18, the terminal device 40 individually sets the contention window size in a case where the directions are different, and sets the common contention window size in a case where only the beam widths are different. More specifically, the terminal device 40 groups, for example, beams #1, #2, and #12 as one group, and sets the contention window size CW = 15. Then, the terminal device 40 groups the beam #3 as one group, and sets the contention window size CW = 63.

In this manner, grouping of beams having a common contention window size may be set. This setting can be performed, for example, in the same manner as the setting of the LBT category described above. Alternatively, grouping of common beams may be defined in the implementation. In this case, the terminal device 40 may report a relationship of grouped beams to a communication partner.

A relationship between an SS/PBCH block and a CSI-RS is an example of beam grouping. CSI-RSs quasi-co-located with an SS/PBCH block can be regarded as the same group. In the example of FIG. 18, a beam #12 is defined by an index of an SS/PBCH block, beams #1 and #2 are defined by indexes of CSI-RSs, and a beam #3 is defined by an index of an SS/PBCH block or a CSI-RS.

The application of the control method for the contention window described above can be changed according to the condition. An example condition includes a physical channel/physical signal. For example, the first control method or the third control method is applied to unicast transmission (a unicast PDSCH, a unicast PUSCH, a PDCCH of a USS, or the like), the second control method is applied to broadcast transmission (a PBCH, a PDSCH including a SIB, a PDCCH of a CSS), and the third control method is applied to reference signal transmission (CSI-RS or SRS).

The beam can also be associated with other physical parameters. A CORESET is an example of the association. It may be assumed that different CORESETs are transmitted by different beams. That is, in each CORESET, each contention window is independently controlled, and the value of the contention window is held. Further, the above control method may be individually set for each CORESET. For example, the second control method for the contention window may be applied to a PDCCH of a CORESET #0 and a corresponding PDSCH, and the first control method for the contention window may be applied to a PDCCH of another CORESET and a corresponding PDSCH.

As an example of other associations, a search space, an RNTI, a DCI, a PRACH occasion, a RACH preamble, a PUCCH format, or the like may also be associated with a beam and a contention window.

The LBT parameter that can be set for each beam is not limited to the contention window size. For example, as other LBT parameters, the contention window size adjustment method, the backoff counter, the sensing slot length, the CP extension length, the LBT scheme (whether the receiver assisted LBT can be applied or not or whether the semi-static channel access can be applied or not), and the maximum channel occupancy time can also be set for each beam. In this case, similarly to the contention window size, the contention window size adjustment method, the backoff counter, the sensing slot length, the CP extension length, the LBT scheme (whether the receiver assisted LBT can be applied or not or whether the semi-static channel access can be applied or not), and the maximum channel occupancy time can be applied for different directions and beam widths. Alternatively, the contention window size adjustment method, the backoff counter, the sensing slot length, the CP extension length, the LBT manner (whether the receiver assisted LBT can be applied or not or whether the semi-static channel access can be applied or not), and the maximum channel occupancy time common to all directions and beam widths may be applied, and the contention window size adjustment method, the backoff counter, the sensing slot length, the CP extension length, the LBT scheme (whether the receiver assisted LBT can be applied or not or whether the semi-static channel access can be applied or not), and the maximum channel occupancy time may be applied for each group.

### · Energy Detection Threshold

Alternatively, for example, the energy detection threshold can also be set for each beam. In this case, different energy detection thresholds can be applied for different directions and beam widths, similar to the contention window size. Alternatively, a common energy detection threshold may be applied for all directions and beam widths, or an energy detection threshold may be applied for each group. As an example, calculation of the energy detection threshold can also include a value for a beam gain and/or beam width of the corresponding beam. For energy detection before transmission to which a predetermined beam is applied, energy detection is performed using a threshold calculated including a value related to a beam gain and/or beam width of the predetermined beam. Examples of the value related to the beam gain and/or beam width include a half-power angle, information regarding an antenna (antenna configuration, the number of antenna ports, or the number of antenna elements), and the like.

### <<4 . Communication Processings

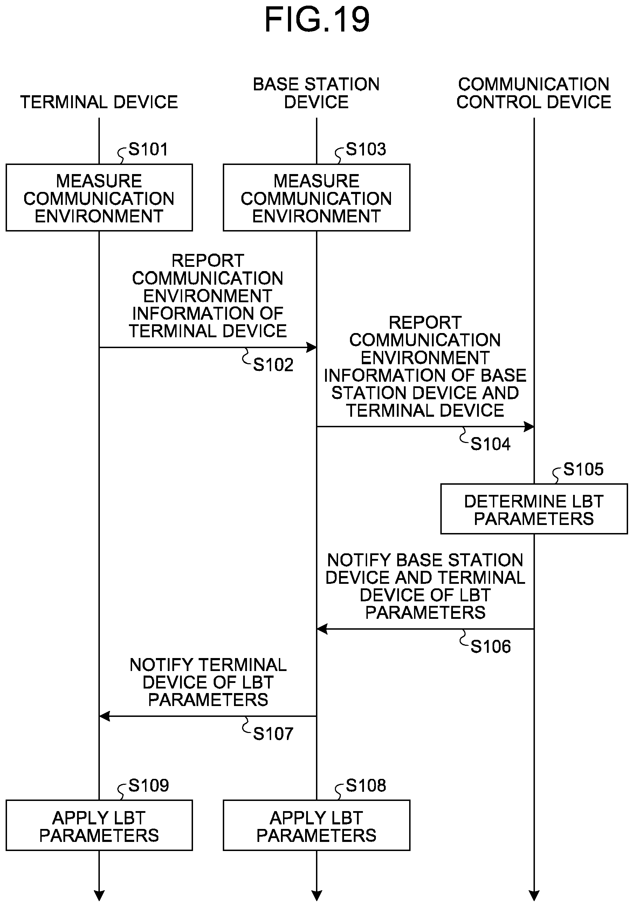

Subsequently, communication processing according to the embodiment of the present disclosure will be described. Here, a case where the communication control device 30 determines the LBT parameters including the LBT category based on the measurement information of the base station device 20 and the terminal device 40 will be described with reference to FIG. 19. FIG. 19 is a sequence diagram illustrating a flow of the communication processing according to the embodiment of the present disclosure.

As illustrated in FIG. 19, the terminal device 40 measures a communication environment (Step S101), and reports communication environment information that is the measurement result to the base station device 20 (Step S102). The base station device 20 measures the communication environment (Step S103), and reports the communication environment information of the terminal device 40 and communication environment information that is the measurement result of the base station device 20 to the communication control device 30 (Step S104).

The communication control device 30 determines the LBT parameters including the LBT category based on the reported communication environment information (Step S105). The communication control device 30 notifies the base station device 20 and the terminal device 40 of the determined LBT parameters (Step S106).

The base station device 20 that has received the notification notifies the terminal device 40 of the LBT parameters (Step S107), and performs communication by applying the LBT parameters (Step S108). The terminal device 40 that has received the notification performs communication by applying the LBT parameters (Step S109).

### <<5. Modified Example>>

The terminal device or the base station device of the present embodiment may be implemented by a dedicated computer system or a general-purpose computer system.

For example, a communication program for performing the above-described operations is stored in a computer-readable recording medium such as an optical disk, a semiconductor memory, a magnetic tape, or a flexible disk, and distributed. Then, for example, the control device is implemented by installing the program in a computer and performing the above-described processing. At this time, the control device may be the terminal device 40, the base station device 20, or another external device (for example, a personal computer). Furthermore, the control device may be a device (for example, each control unit) inside the terminal device 40 and the base station device 20.

Further, the communication program may be stored in a disk device included in a server device on a network such as the Internet, and be downloaded to a computer. Further, the functions described above may be realized by cooperation between an operating system (OS) and application software. In this case, the part other than the OS may be stored in a medium and distributed, or the part other than the OS may be stored in the server device and downloaded to a computer.

Further, among the respective processing described in the above-described embodiments, all or some of the processing described as being automatically performed can be manually performed. Alternatively, all or some of the processing described as being manually performed can be automatically performed by a known method. In addition, the processing procedures, specific names, information including various data and parameters illustrated in the specification and drawings can be arbitrarily changed unless otherwise specified. For example, various pieces of information illustrated in the drawings are not limited to those illustrated in the drawings.

Further, each illustrated component of each device is functionally conceptual, and does not necessarily have to be configured physically as illustrated in the drawings. That is, the specific modes of distribution/integration of the respective devices are not limited to those illustrated in the drawings. All or some of the devices can be functionally or physically distributed/integrated in any arbitrary unit, depending on various loads or the usage status.

Further, the above-described embodiments can be appropriately combined as long as the processing contents do not contradict each other.

### <<6. Conclusion>>

As described above, the preferred embodiments of the present disclosure have been described in detail with reference to the accompanying drawings, but the technical scope of the present disclosure is not limited to such examples. It will be apparent to those skilled in the art to which the present disclosure pertains that various modifications or alterations can be conceived within the scope of the technical idea described in the claims and it is naturally understood that these modifications or alterations fall within the technical scope of the present disclosure.

Further, the processing described with reference to the flowcharts and the sequence diagrams in the present specification does not necessarily have to be performed in the illustrated order. Some processing steps may be performed in parallel. Further, additional processing steps may be employed, and some processing steps may be omitted.

Furthermore, the effects described in the present specification are merely illustrative or exemplary and are not restrictive. That is, the technology according to the present disclosure can exhibit, in addition to or in place of the above-described effects, other effects obvious to those skilled in the art from the description of the present specification.

Note that the following configurations also fall within the technical scope of the present disclosure.
(1) A communication device comprising:
   a sensing unit that performs sensing of a channel in an unlicensed band;
   a communication unit that performs communication based on a result of the sensing; and
   a control unit that selects, as a method for the sensing, any one of a first manner of performing the sensing a predetermined number of times within a variable period and a second method different from the first method according to a predetermined condition.
(2) The communication device according to (1), wherein the second method is a method of performing the sensing a predetermined number of times within a fixed period.
(3) The communication device according to (1) or (2), wherein the control unit selects the first method in a case where there is another communication device that performs the sensing by the first method therearound.
(4) The communication device according to (3), wherein the control unit selects the method for the sensing based on a notification from the another communication device.
(5) The communication device according to any one of (1) to (4), wherein the control unit selects the method for the sensing based on measurement information obtained by measuring quality of communication with a communication partner.
(6) The communication device according to any one of (1) to (5), wherein the control unit selects the method for the sensing according to the number of times of retransmission.
(7) The communication device according to any one of (1) to (6), wherein the control unit selects the method for the sensing based on a result of the sensing.
(8) The communication device according to (7), wherein the control unit selects the first method as the method for the sensing in a case where a frequency of being busy is equal to or more than a predetermined value as a result of the sensing.
(9) The communication device according to any one of (1) to (8), wherein the control unit selects the method for the sensing according to an instruction from another device.
(10) The communication device according to any one of (1) to (9), wherein
   the communication unit performs communication by using one of a plurality of beams, and
   the control unit sets a parameter related to the sensing for each of the plurality of beams.
(11) The communication device according to (10), wherein the control unit divides the plurality of beams into one or more beam groups including at least one of the beams, and sets the parameter different for each beam group.
(12) A communication method comprising:
   performing channel sensing in an unlicensed band;
   performing communication based on a result of the sensing; and
   selecting, as a method for the sensing, one of a first manner of performing the sensing a predetermined number of times within a variable period and a second method different from the first method according to a predetermined condition.
(13) A program causing a computer to perform:
   performing channel sensing in an unlicensed band;
   performing communication based on a result of the sensing; and
   selecting, as a method for the sensing, one of a first manner of performing the sensing a predetermined number of times within a variable period and a second method different from the first method according to a predetermined condition.

### Reference Signs List

- 120: CORE NETWORK
- 20: BASE STATION DEVICE
- 21: WIRELESS COMMUNICATION UNIT
- 24, 45: CONTROL UNIT
- 30: COMMUNICATION CONTROL DEVICE
- 40: TERMINAL DEVICE
- 41: WIRELESS COMMUNICATION UNIT

## Claims

1. A communication device comprising:
a sensing unit that performs sensing of a channel in an unlicensed band;
a communication unit that performs communication based on a result of the sensing; and
a control unit that selects, as a method for the sensing, any one of a first manner of performing the sensing a predetermined number of times within a variable period and a second method different from the first method according to a predetermined condition.

2. The communication device according to claim 1, wherein the second method is a method of performing the sensing a predetermined number of times within a fixed period.

3. The communication device according to claim 1, wherein the control unit selects the first method in a case where there is another communication device that performs the sensing by the first method therearound.

4. The communication device according to claim 3, wherein the control unit selects the method for the sensing based on a notification from the another communication device.

5. The communication device according to claim 1, wherein the control unit selects the method for the sensing based on measurement information obtained by measuring quality of communication with a communication partner.

6. The communication device according to claim 1, wherein the control unit selects the method for the sensing according to the number of times of retransmission.

7. The communication device according to claim 1, wherein the control unit selects the method for the sensing based on a result of the sensing.

8. The communication device according to claim 7, wherein the control unit selects the first method as the method for the sensing in a case where a frequency of being busy is equal to or more than a predetermined value as a result of the sensing.

9. The communication device according to claim 1, wherein the control unit selects the method for the sensing according to an instruction from another device.

10. The communication device according to claim 1, wherein
the communication unit performs communication by using one of a plurality of beams, and
the control unit sets a parameter related to the sensing for each of the plurality of beams.

11. The communication device according to claim 10, wherein the control unit divides the plurality of beams into one or more beam groups including at least one of the beams, and sets the parameter different for each beam group.

12. A communication method comprising:
performing channel sensing in an unlicensed band;
performing communication based on a result of the sensing; and
selecting, as a method for the sensing, one of a first manner of performing the sensing a predetermined number of times within a variable period and a second method different from the first method according to a predetermined condition.

13. A program causing a computer to perform:
performing channel sensing in an unlicensed band;
performing communication based on a result of the sensing; and
selecting, as a method for the sensing, one of a first manner of performing the sensing a predetermined number of times within a variable period and a second method different from the first method according to a predetermined condition.
